# EUROPEAN PATENT SPECIFICATION

(11) **EP 3 410 804 B1**
(45) Date of publication and mention of the grant of the patent: **28.07.2021**
(21) Application number: 17747569.6
(22) Date of filing: 03.02.2017
(51) Int. Cl.: H04W 72/12, H04W 72/04, H04L 5/00, H04W 4/70

(54) **USER TERMINAL, WIRELESS BASE STATION, AND WIRELESS COMMUNICATION METHOD**
BENUTZERENDGERÄT, DRAHTLOSE BASISSTATION UND DRAHTLOSKOMMUNIKATIONSVERFAHREN
TERMINAL UTILISATEUR, STATION DE BASE SANS FIL, ET PROCÉDÉ DE COMMUNICATION SANS FIL

(30) Priority: 04.02.2016 JP 2016020304
(43) Date of publication of application: 05.12.2018
(73) Proprietor: NTT DOCOMO, INC., Chiyoda-ku Tokyo 100-6150 (JP)
(72) Inventor: TAKEDA, Kazuaki, Tokyo 100-6150 (JP); NAGATA, Satoshi, Tokyo 100-6150 (JP); MU, Qin, Beijing 100190 (CN); LIU, Liu, Beijing 100190 (CN); JIANG, Huiling, Beijing 100190 (CN)
(74) Representative: Hoffmann Eitle
(86) International application number: PCT/JP2017/004010
(87) International publication number: WO 2017/135418

(56) References cited:
- US-A1- 2014 105 191
- HUAWEI ET AL: "On physical channel timing relationships", 3GPP DRAFT; R1-155109, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Malmo, Sweden; 20151005 - 20151009 4 October 2015 (2015-10-04), XP051002096, Retrieved from the Internet: URL:http://www.3gpp.org/ftp/Meetings_3GPP_ SYNC/RAN1/Docs/ [retrieved on 2015-10-04]
- NOKIA NETWORKS: "DCI design for NB-IoT", 3GPP DRAFT; R1-160017, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Budapest, HU; 20160118 - 20160120 17 January 2016 (2016-01-17), XP051053340, Retrieved from the Internet: URL:http://www.3gpp.org/ftp/Meetings_3GPP_ SYNC/RAN1/Docs/ [retrieved on 2016-01-17]
- NOKIA NETWORKS: "Timing Relationships for NB-IoT", 3GPP DRAFT; R1-160003, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Budapest, HU; 20160118 - 20160120 17 January 2016 (2016-01-17), XP051053326, Retrieved from the Internet: URL:http://www.3gpp.org/ftp/Meetings_3GPP_ SYNC/RAN1/Docs/ [retrieved on 2016-01-17]
- ZTE: "Scheduling of DL and UL data channels for NB-IOT", 3GPP DRAFT; R1-160046 NB-IOT SCHEDULING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Budapest, HU; 20160118 - 20160120 11 January 2016 (2016-01-11), XP051064631, Retrieved from the Internet: URL:http://www.3gpp.org/ftp/tsg_ran/WG1_RL 1/TSGR1_AH/LTE_NB-IoT_1601/Docs/ [retrieved on 2016-01-11]
- ZTE ET AL: "WF on Timing of NB-PDCCH and NB- PDSCH/PUSCH for NB-IoT ZTE, ...", 3GPP DRAFT; R1-160209 WF CONTROL TIMING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Budapest, HU; 20160118 - 20160120 19 January 2016 (2016-01-19), XP051064813, Retrieved from the Internet: URL:http://www.3gpp.org/ftp/tsg_ran/WG1_RL 1/TSGR1_AH/LTE_NB-IoT_1601/Docs/ [retrieved on 2016-01-19]
- HUAWEI ET AL: "Timing Relationships", 3GPP DRAFT; R1-160098, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Budapest, HU; 20160118 - 20160120 17 January 2016 (2016-01-17), XP051053418, Retrieved from the Internet: URL:http://www.3gpp.org/ftp/Meetings_3GPP_ SYNC/RAN1/Docs/ [retrieved on 2016-01-17]
- ZTE: "Scheduling of DL and UL data channels for NB-IOT", 3GPP TSG RAN WG1 adhoc_LTE_NB- IoT 1601 R1-160046, 11 January 2016 (2016-01-11), XP051064631, Retrieved from the Internet: URL:http://www.3gpp.org/ftp/tsg_ran/WG1_RL 1/TSGR1_ AH/LTE_NB-IoT_1601/Docs/R1-160046.zip [retrieved on 2017-04-10]
- ZTE: "WF on Timing of NB-PDCCH and NB-PDSCH/ PUSCH for NB-IoT", 3GPP TSG RAN WG1 adhoc_LTE_NB-IoT_1601 R1-160209, 19 January 2016 (2016-01-19), XP051064813, Retrieved from the Internet: URL:http://www.3gpp.org/ftp/tsg _ran/ WG1_RL1/TSGR1_AH/LTE_NB-IoT_1601/Docs/R1-1 60209. zip [retrieved on 2017-04-10]

## Description

### [Technical Field]

The present invention relates to a user terminal, a radio base station, and a radio communication method in a next generation mobile communication system.

### [Background Art]

In universal mobile telecommunications system (UMTS) network, long term evolution (LTE) has been specified in order to realize higher data rate, low delay, and the like (Non Patent Literature 1). In addition, to realize wider band and higher data rate than those of the LTE, a succeeding system of the LTE (for example, also referred to as LTE-Advanced (LTE-A), future radio access (FRA), 4G, 5G, LTE Rel. 13, 14, 15, etc.) has been under consideration.

Incidentally, in recent years, technology of machine-to-machine (M2M) communication in which devices connected to network communicate with each other to automatically perform control without manual control has been actively developed, in association with cost reduction of a communication device. In particular, in third generation partnership project (3GPP), standardization relating to optimization of machine-type communication (MTC) as a cellular system for device communication in the M2M is ongoing (Non Patent Literature 2). It has been considered that MTC user equipment (UE) is applied to a wide range of fields such as an electricity meter, a gas meter, an automatic vending machine, a vehicle, and other industrial apparatuses.

### [Citation List]

### [Non Patent Literature]

[Non Patent Literature 1] 3GPP TS 36.300 "Evolved Universal Terrestrial Radio Access (E-UTRA) and Evolved Universal Terrestrial Radio Access Network (E-UTRAN); Overall description; Stage 2"
[Non Patent Literature 2] 3GPP TR 36.888 "Study on provision of low-cost Machine-Type Communications (MTC) User Equipments (UEs) based on LTE (Release 12)"

In the contribution entitled "On Physical Channel Timing Relationships" (XP051002096), the authors analyse the timing relationships between UL/DL control and data channels for HARQ operation. The timing for UEs operating or not operating coverage enhancement is proposed to follow the procedure as illustrated. The authors proposed that the M-PDCCH monitoring subframes should be UE-specifically configurable for MTC UEs in normal coverage. For unicast DL HARQ operation for MTC UEs in normal coverage, the timing relationships depend on the offsets between M-PDCCH monitoring subframes.

In the contribution entitled "DCI Design for NB-IoT" (XP051053340), the authors consider DCI design for NB-IoT and provide examples of NB-IoT UL and DL scheduling grants. In addition, the authors propose that NB-IoT and DL scheduling grants should have the same size and that NB-PDCCH order is supported for NB-IoT.

In the contribution entitled "Timing Relationships for NB-IoT" (XP051053326), the authors discuss DL and UL timing relationships for NB-IoT. The authors propose that the NB-PDSCH transmission can begin either in the first subframe following the last repetition of the NB-PDCCH or after a delay indicated to the UE, the timing of UL ACK/NACK transmission relative to the last repetition of NB-PDSCH follows legacy timing, and the timing of NB-PUSCH transmission relative to the last repetition of NB-PDCCH follows legacy timing.

In the contribution entitled "Scheduling of DL and UL data channels for NB-IOT" (XP051064631), the authors disclose DL and UL scheduling. The authors disclose that, if UL scheduling timing interval is fixed, UL scheduling would be restricted due to limited number of NB-PDCCH, and UL resources would be waste when only single tone scheduled, if continuous transmission of NB-PDCCH repetition is used, transmission of Ul grants of other UEs would be blocked which would lead to UL resource waste, and that, if fixed value is used for DL scheduling timing interval, DL resource would be wasted since control channel resources and traffic channel resources are asymmetric. Accordingly, the authors proposed that UL scheduling is based on scheduling window. The timing interval of scheduling window for UL grant and scheduling window for associated NB-PUSCH is fixed as one scheduling window. Location of NB-PUSCH in scheduling window can be dynamic signaled by DCI. The authors also propose that DL scheduling is based on scheduling window, and location of NB-PDSCH in scheduling window can be dynamic signaled by DCT.

In the presentation entitled "WF on Timing of NB-PDCCH and NB-PDSCH/PUSCH for NB-IoT" (XP051064813), the authors disclose two proposals for setting the value of the time interval between the end subframe of NB-PDCCH and the starting subframe of the corresponding NB-PDSCH, for a NB-IoT UE. Corresponding proposals for setting the value of the time interval between the end subframe of NB-PDSCH and the starting subframe ofNB-PUSCH are also provided.

In the contribution entitled "Timing Relationships" (XP051053418), the authors disclose fixed timing relationships in LTE physical layer including DL grant->PDSCH transmission, UL grant->PUSCH transmission, PDSCH transmission->UL A/N, PUSCH-> DLA/N and PUSCH->PUSCH retransmission for both FDD and TDD. The authors discuss the timeline design in NB-IoT and provide their proposals.

US 2014/0105191 A1 discloses a wireless communication system. In more detail, a method for performing HARQ (hybrid automatic repeat request) retransmission by a communication device in a wireless communication system, the method comprising: initially transmitting a data block to a Base Station (BS); attempting PDCCH (physical downlink control channel detection) in a predetermined time interval including a plurality of subframes after transmission of an uplink channel signal; and retransmitting the data block when a PDCCH signal indicating retransmission of the data block is detected in the predetermined time interval, wherein reception of a PHICH (physical hybrid ARQ indicator channel) corresponding to initial transmission of the data block is skipped.

### [Summary of Invention]

### [Technical Problem]

In the MTC, demand for the MTC user equipment (low-cost (LC)-MTC equipment, LC-MTC UE) that is realizable with a simple hardware configuration is increasing in terms of cost reduction and improvement of coverage area in the cellular system. As a communication system of such LC-MTC equipment, LTE communication in an extremely narrow band (for example, also referred to as, for example, narrow band Internet of Things (NB-IoT), narrow band LTE (NB-LTE), narrow band cellular Internet of Things (NB cellular IoT), or clean slate) has been under consideration. Hereinafter, "NB-IoT" used herein includes the NB-LTE, the NB cellular IoT, the clean slate, and the like described above.

It is expected that the usable band of a user terminal supporting the NB-IoT (hereinafter, referred to as NB-IoT equipment) is limited to a band (for example, 180 kHz or one resource block (RB); also referred to as, for example, physical resource block (PRB)) which is narrower than the minimum system band (1.4 MHz) of the existing LTE system (for example, the LTE system before Rel. 12).

As mentioned above, it is expected that resource allocation by a frequency unit (for example, a subcarrier unit) smaller than the PRB that is a resource allocation unit in the LTE system, is necessary for the NB-IoT equipment, the usable band of which is limited to a band narrower than the band of the existing user terminal (for example, LTE equipment before Rel. 12).

In the existing LTE system, however, resource allocation to the user terminal by the PRB unit is premised, and how to allocate the resources to the NB-IoT equipment by a frequency unit smaller than one PRB to control communication becomes an issue.

The present invention is made in consideration of such a situation, and an object of the present invention is to provide a user terminal, a radio base station, and a radio communication method that make it possible to appropriately perform communication even when resource allocation is controlled by a frequency unit (for example, a subcarrier unit) that is smaller than the resource allocation unit in the existing LTE system.

### [Solution to Problem]

The present invention provides a user terminal in accordance with claim 1.

The present invention also provides a user terminal in accordance with claim 4.

The present invention also provides a radio base station in accordance with claim 5.

The present invention also provides a radio communication method in accordance with claim 6.

### [Advantageous Effects of Invention]

The present invention makes it possible to appropriately perform communication even when resource allocation is controlled by a frequency unit (for example, a subcarrier unit) that is smaller than the resource allocation unit in the existing LTE system.

### [Brief Description of Drawings]

[FIG. 1] FIG. 1 is an explanatory diagram of a usable band ofNB-IoT equipment.
[FIG. 2] FIG. 2A and FIG. 2B are diagrams each illustrating an example of a resource unit in NB-IoT.
[FIG. 3] FIG. 3A and FIG. 3B are diagrams to explain an example of a subframe set.
[FIG. 4] FIG. 4A and FIG. 4B are diagrams to explain another example of the subframe set.
[FIG. 5] FIG. 5 is a diagram illustrating an example of UL transmission using timing of an existing system.
[FIG. 6] FIG. 6 is a diagram illustrating another example of the UL transmission using the timing of the existing system.
[FIG. 7] FIG. 7 is a diagram illustrating an example of UL transmission according to the present embodiment.
[FIG. 8] FIG. 8 is a diagram illustrating another example of the UL transmission according to the present embodiment.
[FIG. 9] FIG. 9 is a diagram illustrating still another example of the UL transmission according to the present embodiment.
[FIG. 10] FIG. 10 is a diagram illustrating still another example of the UL transmission according to the present embodiment.
[FIG. 11] FIG. 11A and FIG. 11B are diagrams each illustrating an example of DL transmission according to the present embodiment.
[FIG. 12] FIG. 12A and FIG. 12B are diagrams each illustrating another example of the DL transmission according to the present embodiment.
[FIG. 13] FIG. 13 is a schematic configuration diagram of a radio communication system according to the present embodiment.
[FIG. 14] FIG. 14 is a diagram illustrating an example of an entire configuration of a radio base station according to the present embodiment.
[FIG. 15] FIG. 15 is a diagram illustrating an example of a functional configuration of the radio base station according to the present embodiment.
[FIG. 16] FIG. 16 is a diagram illustrating an example of an entire configuration of a user terminal according to the present embodiment.
[FIG. 17] FIG. 17 is a diagram illustrating an example of a functional configuration of the user terminal according to the present embodiment.
[FIG. 18] FIG. 18 is a diagram illustrating an example of a hardware configuration of the radio base station and the user terminal according to the present embodiment.

### [Description of Embodiment]

Simplification of a hardware configuration of NB-IoT equipment by allowing reduction of process capability has been under consideration. For example, in the NB-IoT equipment, application of reduction of a peak rate, limitation of transport block size (TBS), limitation of a resource block (RB, also referred to as, for example, physical a resource block (PRB)), limitation of reception radio frequency (RF), and the like have been under consideration, as compared with an existing user terminal (for example, LTE equipment before Rel. 12).

Unlike the LTE equipment that has an upper limit of a usable band that is set to a system band (for example, 20 MHz (100 RBs) or one component carrier), an upper limit of the usable band of the NB-IoT equipment is limited to a predetermined narrow band (NB, for example, 180 kHz or 1.4 MHz). For example, the predetermined narrow band may be the same as the minimum system band (for example, 1.4 MHz, six PRBs) of the existing LTE system (the LTE system before Rel. 12, hereinafter, also simply referred to as the LTE system), or may be a portion of the band of the existing LTE system (for example, 180 kHz, 1 PRB).

As mentioned above, the NB-IoT equipment also regarded as equipment that has the upper limit of the usable band lower than the usable band of the existing LTE equipment, or equipment that can perform transmission and/or reception (hereinafter, referred to as transmission/reception) in a band (for example, a band narrower than 1.4 MHz) narrower than the band of the existing LTE equipment. Operation of the NB-IoT equipment in the system band of the LTE system has been under consideration in view of backward compatibility with the existing LTE system. For example, in the system band of the LTE system, frequency multiplexing may be supported between the NB-IoT equipment with a limited band and the existing LTE equipment without a limited band. In addition, the NB-IoT may be operated with use of a guard band between carriers adjacent to the LTE system band, or an exclusive frequency, in addition to in the LTE system band.

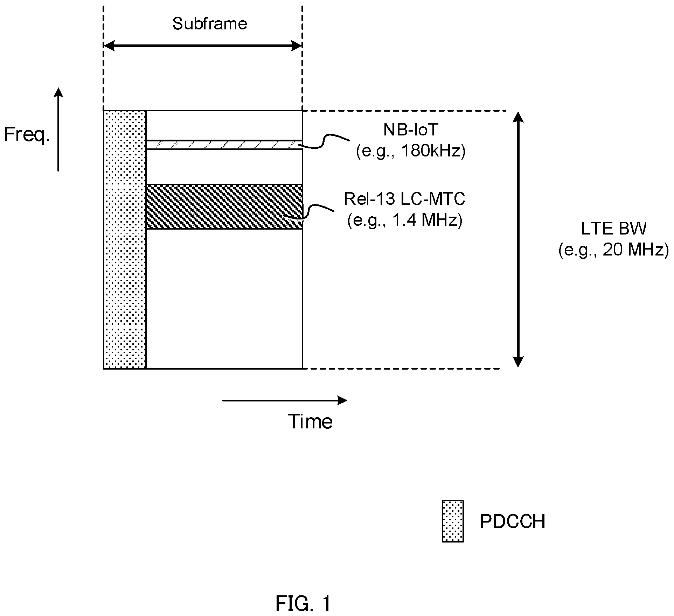

FIG. 1 is a diagram illustrating an allocation example of a narrow band that serves as the usable band of the NB-IoT equipment. In FIG. 1, the usable band of the NB-IoT equipment is set to a portion of the system band (for example, 20 MHz) of the LTE system. Note that, in FIG. 1 and subsequent drawings, the usable band of the NB-IoT equipment is assumed to be set to 180 kHz, without limitation. The usable band of the NB-ToT equipment may be, for example, equal to or lower than a usable band of LC-MTC equipment of Rel.13 (for example, 1.4 MHz) as long as being narrower than the system band of the LTE system (for example, 20 MHz).

A frequency position of the narrow band that serves as the usable band of the NB-IoT equipment may be preferably variable in the system band. For example, the NB-IoT equipment may preferably perform communication with use of a frequency resource that is different depending on a predetermined period (such as subframe). This makes it possible to realize traffic offload and a frequency diversity effect with respect to the NB-IoT equipment, and to suppress reduction of usage efficiency of the frequency. Therefore, the NB-IoT equipment may preferably have an RF rerunning function in consideration of the application of frequency hopping and frequency scheduling.

The NB-IoT equipment may use different bands between uplink and downlink or the same band. The band used in downlink transmission/reception may be referred to as a downlink narrow band (DL NB). The band used in uplink transmission/reception may be referred to as an uplink narrow band (UL NB).

The NB-IoT equipment receives downlink control information (DCI) with use of a downlink control channel that is allocated in the narrow band. The downlink control channel may be referred to as, for example, a physical downlink control channel (PDCCH), an enhanced physical downlink control channel (EPDCCH), an MTC PDCCH (M-PDCCH), or an NB-PDCCH.

The NB-IoT equipment receives downlink data with use of a downlink shared channel that is allocated in the narrow band. The downlink shared channel may be referred to as, for example, a physical downlink shared channel (PDSCH), an MTC PDSCH (M-PDSCH), or an NB-PDSCH.

The NB-IoT equipment transmits uplink control information (UCI) such as a hybrid automatic repeat request acknowledge (HARQ-ACK) and channel state information (CSI), with use of an uplink control channel that is allocated in the narrow band. The uplink control channel may be referred to as, for example, a physical uplink control channel (PUCCH), an MTC PUCCH (M-PUCCH), or an NB-PUCCH.

The NB-IoT equipment receives the UCI and/or uplink data with use of an uplink shared channel that is allocated in the narrow band. The uplink shared channel may be referred to as, for example, a physical uplink shared channel (PUSCH), an MTC PUSCH (M-PUSCH), or an NB-PUSCH.

An existing channel used for the same purpose may be represented with "M" indicating MTC, or "N" or "NB" indicating NB-IoT, without limitation to the above-described channels. In the following, the downlink control channel, the downlink shared channel, the uplink shared channel, and the uplink shared channel are respectively referred to as PDCCH, PDSCH, PUCCH, and PUSCH; however, the abbreviations are not limited thereto, as mentioned above.

To enhance the coverage, the NB-IoT may perform repetitive transmission/repetitive reception in which the same downlink signal (such as the PDCCH and the PDSCH) and/or the same uplink signal (such as the PUCCH and the PUSCH) is transmitted/received over a plurality of subframes. The number of subframes in which the same downlink signal and/or the same uplink signal is transmitted/received is also referred to as repetition number. Further, the repetition number may be represented by a repetition level. The repetition level may be also referred to as coverage enhancement (CE) level.

It has been considered that the NB-IoT as mentioned above supports transmission using a single tone (single-tone transmission) and transmission using a plurality of tones (multiple-tone transmission) in the uplink transmission. The tone used herein has the same meaning as the subcarrier, and indicates each of divided usable bands (for example, 180 kHz, one resource block).

It has been considered that the single-tone transmission supports the subcarrier interval same as the subcarrier interval (namely, 15 kHz) of the existing LTE system and a subcarrier interval (for example, 3.75 kHz) narrower than the subcarrier interval of the LTE system. On the other hand, it has been considered that the multiple-tone transmission supports the subcarrier interval same as the subcarrier interval of the LTE system (namely, 15 kHz). When the subcarrier interval is 15 kHz, one PRB (180 kHz) is configured of 12 subcarriers. In addition, when the subcarrier interval is 3.75 kHz, one PRB is configured of 48 subcarriers. The subcarrier interval applicable in the present embodiment is not limited thereto as a matter of course.

It has been considered that the NB-IoT equipment performs the uplink transmission (for example, transmission of the PUSCH or/and the PUCCH) with the number of tones (subcarriers) that is notified from the radio base station. Examples of combination of the number of tones may include a combination of 1, 3, 6, and 12. The number of tones selected from predetermined combinations is configured by upper layer signaling (such as radio resource control (RRC) signaling and broadcast information), which may allow the NB-IoT equipment to perform the uplink transmission with the configured number of tones.

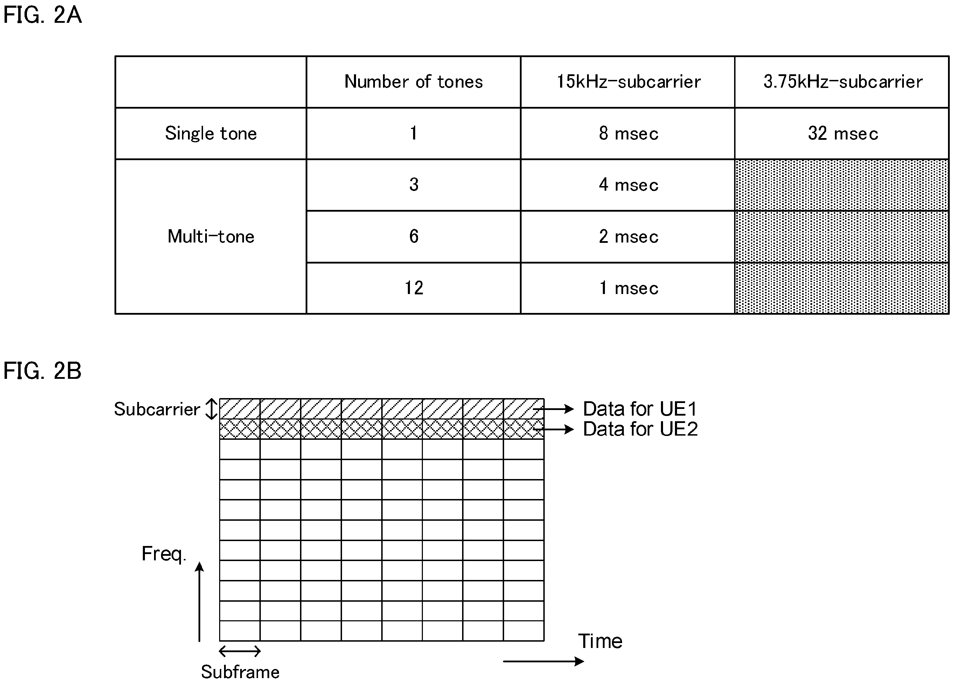

FIG. 2 is a diagram illustrating an example of a resource unit in the NB-IoT. A case in which the combination of 1, 3, 6, and 12 is used as the combination of the number of tones (subcarriers) is described in FIG. 2A; however, the combination of the number of tones is not limited thereto. For example, a combination of 1, 2, 4, and 12 is applicable.

As illustrated in FIG. 2A, a time unit of one resource unit is varied depending on the number of tones configuring one resource unit (namely, the number of subcarriers, frequency unit). More specifically, the time unit configuring one resource unit is increased with the decrease of the number of tones (subcarriers) configuring one resource unit and/or the subcarrier interval.

For example, in FIG. 2A, when the subcarrier interval is 15 kHz that is same as the subcarrier interval of the existing LTE system and the numbers of tones are 12, 6, 3, and 1, the time units of one resource unit respectively become 1 ms, 2 ms, 4 ms, and 8 ms. In addition, when the subcarrier interval is 3.75 kHz that is 1/4 time of the subcarrier interval of the existing LTE system and the number of tones is one, the time unit of one resource unit becomes 32 ms.

FIG. 2B is a diagram illustrating an example of transmission of the uplink data (such as the PUSCH) when the number of tones is one (single tone). As illustrated in FIG. 2B, it is possible to map the uplink data of different user terminals to different subcarriers in the same resource block to control the transmission in the NB-IoT.

Note that, in FIG. 2, one transport block (TB) that serves as a storage unit of data may be mapped to one resource unit or a plurality of resource units. In addition, the resource unit as mentioned above is applicable not only to the uplink transmission but also to the downlink transmission.

Incidentally, since the communication band is extremely limited (for example, one RB (180 kHz)) in the NB-IoT, a configuration in which a plurality of successive subframes are set for the downlink control channel (NB-PDCCH) transmission. Note that the successive subframes set for the NB-PDCCH transmission or reception is also referred to as a subframe set, a successive subframe set, or a control region. Information relating to the subframe set may be notified from the radio base station to the user terminal with use of the upper layer signaling (such as RRC signaling and broadcast information) and/or the downlink control information.

The radio base station may allocate the downlink control channel to the subframe set for the downlink control channel in the NB-IoT and control transmission of the downlink control information (UL grant and/or DL assignment). The user terminal receives the downlink control channel (the downlink control information) included in the subframe set and controls reception of the DL data and/or transmission of the UL data that are scheduled by the downlink control information.

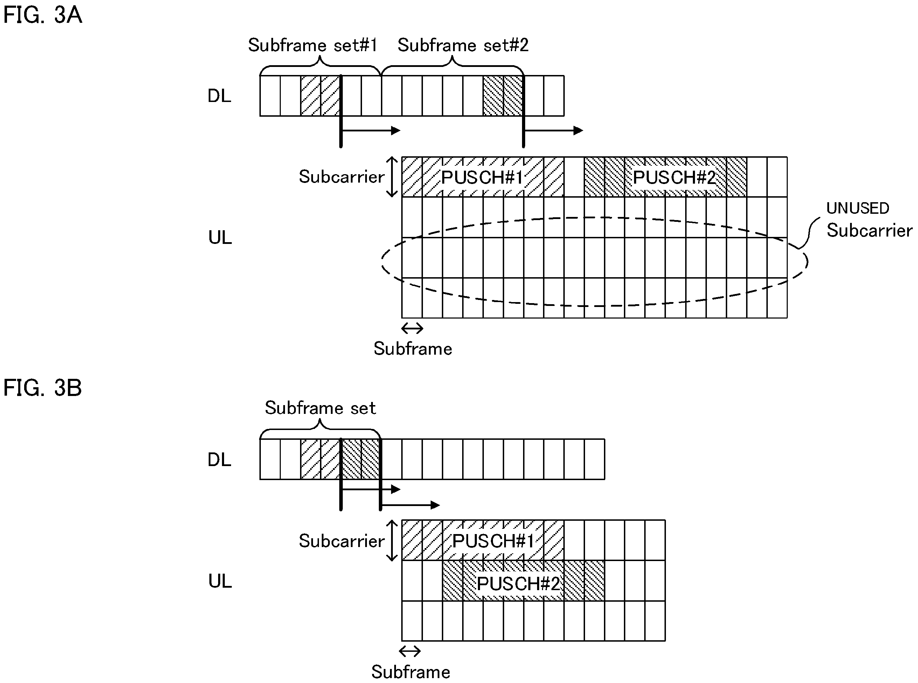

To set the subframe set for the downlink control channel, two methods are considered as a method of transmitting the downlink control information (DCT). A method of transmitting only one piece of DCT in the DL subframe set is considered as one of the methods (refer to FIG. 3A).

In FIG. 3A, a case in which one piece of DCI is allocated to each of a first subframe set (subframe set #1) and a second subframe set (subframe set #2) is illustrated. Note that, in FIG. 3A, a case of allocating one piece of DCI (for example, DCI corresponding to one TB) to two subframes (one piece of DCI is transmitted with use of two subframes) is illustrated. The case of transmitting one piece of DCI with use of two subframes is illustrated in the following description; however, a method of allocating one piece of DCI is not limited thereto.

As with the existing system, a case in which the single-tone UL data transmission is performed in the subframes after a predetermined period (for example, after 4 ms) from the time when the user terminal receives the downlink control channel (DCI) is assumed. A case in which the time unit of the single-tone resource unit is set to 8 ms is described in the following description; however, the time unit is not limited thereto.

In the existing system (for example, eMTC, or category M1), the user terminal acquires data allocation information from the DCI that has been decoded in the subframe #n in which the downlink control channel is transmitted, and receives the downlink data from a subframe #n+k₁ after a predetermined period from the subframe #n. Moreover, the user terminal starts transmission of the uplink data at a subframe #n+k₂ after a predetermined period from the subframe #n in which the downlink control channel is received. In this case, k₁ is defined as 1 and k₂ is defined as 4. Note that, when the repetitive transmission is applied to the downlink control channel, the user terminal controls the UL transmission and the DL reception on the basis of the subframe in which the final downlink control channel is transmitted.

As illustrated in FIG. 3A, when the DCI is transmitted with use of different subframe sets, difference of transmission timings of the respective pieces of DCI becomes large. Therefore, the uplink data (for example, PUSCH#1 and PUSCH#2) scheduled by the corresponding pieces of DCI are allocated to different time regions (subframes) in the same subcarrier. In this case, a resource that is not used by any of the user terminals (unused subcarrier) is generated in a frequency direction, which may cause deterioration of usage efficiency of resources.

A method of transmitting a plurality of pieces of DCI in one subframe set is considered as a second method (refer to FIG. 3B). In FIG. 3B, a case of allocating a plurality of (two in this case) pieces of DCI to one subframe set is illustrated. In addition, in FIG. 3B, a case of allocating one piece of DCI to two subframes and allocating two pieces of DCI to successive subframes is illustrated.

As with the existing system, a case in which the single-tone UL data transmission is performed in a subframe after a predetermined period (for example, after 4 ms) from a time when the user terminal receives the downlink control channel is assumed. In this case, it is possible to allocate the UL data (PUSCH #1 and PUSCH #2) that are scheduled by the respective pieces of DCI, so as to be overlapped with each other in the time region (the subframes) because a difference of transmission timing between the DCI is reduced. Therefore, the UL data are allocated to different subcarriers through frequency division multiplexing. In this case, it is possible to reduce the number of unused subcarriers in one PRB, and to accordingly improve the usage efficiency of resources to some extent, as compared with FIG. 3A.

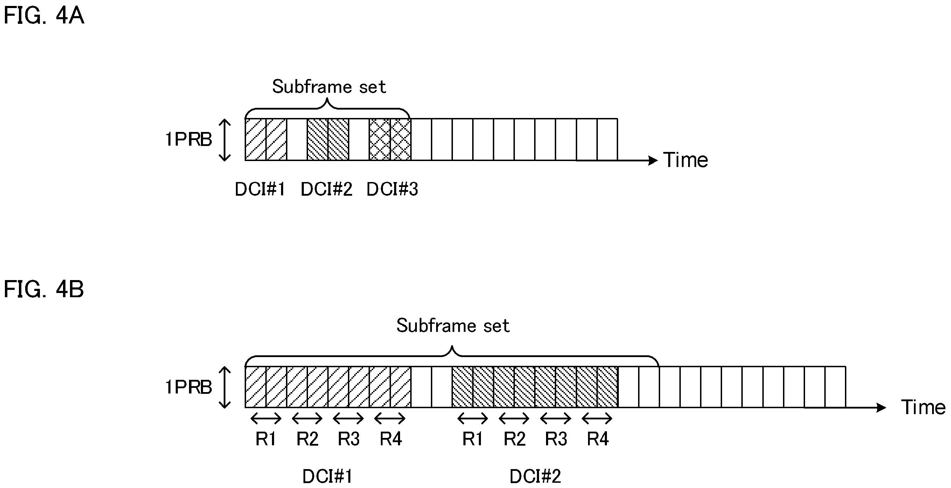

As mentioned above, a plurality of pieces of DCI may be included in the subframe set (the control region) in terms of usage efficiency of frequency (refer to FIG. 4A). Further, the plurality of pieces of DCI to which the repetitive transmission (the coverage enhancement) is applied may be included in the same subframe set (refer to FIG. 4B). FIG. 4A is a diagram illustrating a case in which the plurality of pieces of DCI (DCI #1 to #3) to which the repetitive transmission is not applied are included in the same subframe set, and FIG. 4B is a diagram illustrating a case in which the plurality of pieces of DCI (DCI #1 and #2) to which the repetitive transmission (in this case, the repetition number is four) is applied are included in the same subframe set.

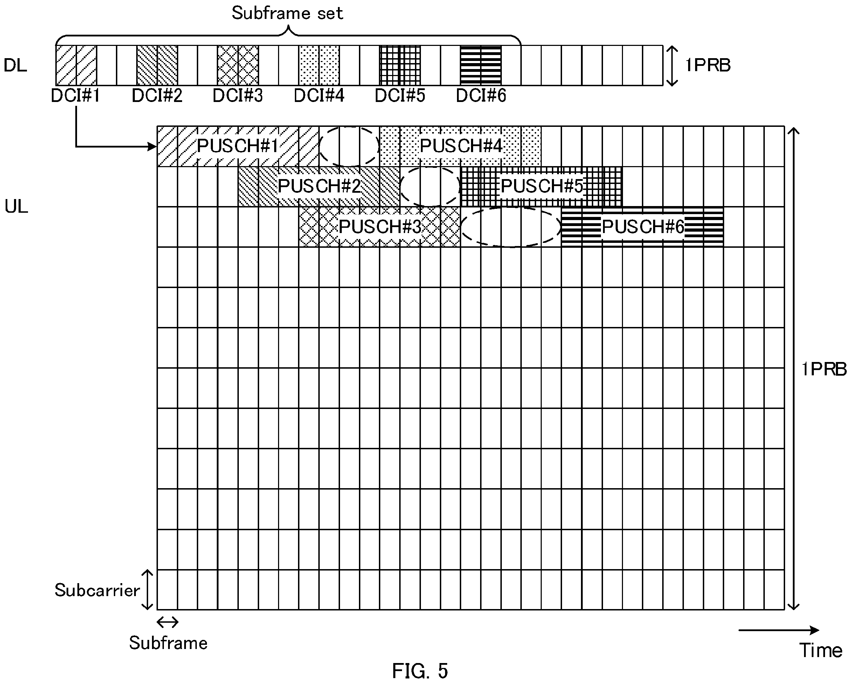

In contrast, even when the plurality of pieces of DCI are included in the same subframe set, it is not possible to sufficiently improve the usage efficiency of the resources if the UL data and/or the DL data is allocated at timing defined by the existing system. For example, as illustrated in FIG. 5, a case in which six pieces of DCI (in this case, UL grant) are included in one subframe set is assumed. In such a case, when the transmission/reception timing of the existing system is used, the UL data (PUSCHs #1 to #6) are allocated at timing after a predetermined period (for example, 4 ms) from the respective subframes to which the respective pieces of DCI (DCI #1 to #6) are allocated.

In this case, the UL data (PUSCH #1) scheduled by the first DCI #1 that is the fastest in allocation timing and the UL data (PUSCHs #2 and #3) respectively scheduled by the second DCI #2 and the third DCI #3 are so allocated as to be partially overlapped with one another in a time region. Therefore, these UL data are so controlled as to be allocated to different subcarriers. On the other hand, the UL data (PUSCH #1) scheduled by the first DCI #1 is not overlapped with the UL data (PUSCH #4) scheduled by the fourth DCI #4 in time region. Therefore, allocation of the data is controlled with use of the same subcarrier.

Unused resources (resource fragment), however, are generated between the UL data (PUSCH #1) of the first DCI #1 and the UL data (PUSCH #4) of the fourth DCI #4. Likewise, unused resources are generated between the UL data (PUSCH #2) of the second DCI #2 and the UL data (PUSCH #5) of the fifth DCI #5, and between the UL data (PUSCH #3) of the third DCI #3 and the UL data (PUSCH #6) of the sixth DCI #6.

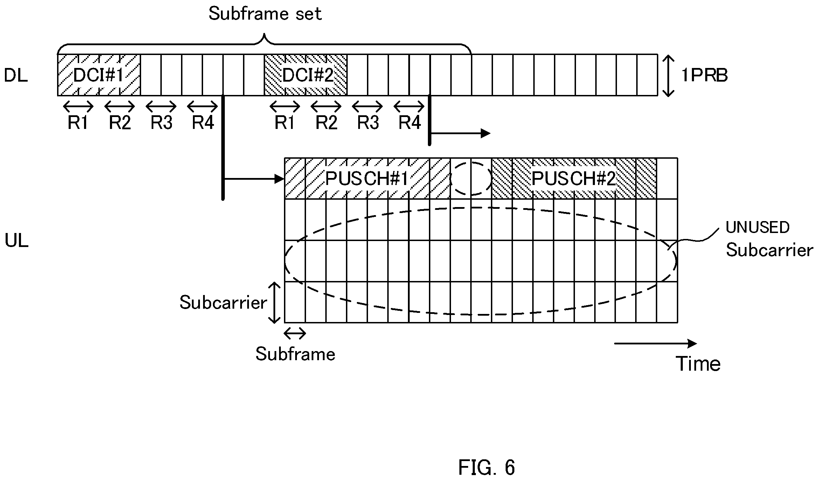

FIG. 6 is a diagram illustrating a case in which two pieces of DCI (DCI #1 and #2) to which the repetitive transmission (the repetition number is four) is applied are provided. When the repetitive transmission is applied, it is necessary for the user terminal to control transmission of the UL data on the basis of the reception timing of the final piece of DCI (DCI transmitted in the fourth transmission) even if the user terminal can receive the DCI in the middle (in this case, the repetition number is two) of the repetitive transmission. In this case, the allocation positions of the uplink data (in this case, PUSCHs #1 and #2) are determined in accordance with the position of the DCI that is repeatedly transmitted in the subframe set. Therefore, it is not possible to efficiently allocate the uplink data (in this case, PUSCHs #1 and #2) depending on the position of the DCI or the repetition number, which does not result in sufficient improvement of the usage efficiency of resources.

As mentioned above, if the transmission/reception timing of the existing system is applied, the usage efficiency of resources may not be sufficiently improved even when the plurality of pieces of DCI are set to one subframe set. Moreover, generation of the unused resources is increased as the number of pieces of DCI allocated to one subframe set and the frequency of repetitive transmission of the DCI are increased. This may further deteriorate the usage efficiency of resources.

Accordingly, the present inventors and other persons concerned focus on the fact that using the existing transmission timing causes unused resources (resource fragment) in a time direction in allocation of the UL data when the plurality of pieces of DCI are included in the same subframe set, and have devised an idea of performing control such that transmission of the UL data scheduled by the respective pieces of DCI included in the same subframe set are started at the same timing.

For example, a one aspect of the present invention, control is performed to start, at the predetermined subframe, the uplink data transmission scheduled by the respective pieces of DCI (UL grant) included in the same subframe set. This makes it possible to suppress generation of unused resources between different pieces of uplink data (in particular, in the time direction), thereby improving the usage efficiency of resources, even when the allocation of the uplink data is controlled while the plurality of pieces of DCI are included in the same subframe set.

As another aspect of the present invention, it is possible to perform control to start, at a predetermined subframe, the downlink data reception scheduled by the respective pieces of DCI (DL assignment) included in the same subframe set.

In the following, an embodiment of the present invention is described in detail with reference to drawings. Note that, in the following, it is assumed that the usable band of the NB-IoT equipment is limited to 180 kHz (one PRB) which is narrower than the minimum system band (1.4 MHz) of the existing LTE system; however, the usable band of the NB-IoT equipment is not limited thereto. In the present embodiment, the usable band of the NB-IoT equipment may be any bandwidth, such as 1.4 MHz, that is equivalent to the minimum system band of the existing LTE system and a band narrower than 180 kHz as long as being narrower than the system band of the existing LTE system.

A case in which the subcarrier interval is set to 15 kHz and the bandwidth of 180 kHz is configured of 12 subcarriers is exemplified below; however, the configuration is not limited thereto. The present embodiment is appropriately applicable to, for example, a case in which the subcarrier interval is set to 3.75 kHz and the bandwidth of 180 kHz is configured of 48 subcarriers. Note that, as described with reference to FIG. 2, the time length of one resource unit may be varied according to the subcarrier interval.

In the following description, the resource allocation unit is regarded as "subcarrier (tone)"; however, the resource allocation unit in the present embodiment is not limited thereto, and may be any optional frequency unit as long as being smaller than the resource allocation unit (PRB) in the existing LTE system.

### (First Aspect)

In a first aspect, a case of controlling transmission start timing of the uplink data that are scheduled by the respective pieces of downlink control information (DCI) included in the subframe set, is described. Note that a case in which the uplink data is transmitted with a single tone (a single subcarrier) is described below; however, the first aspect is applicable to a case in which the uplink data is transmitted with multiple tones (a plurality of subcarriers). In addition, the plurality of pieces of DCI included in one subframe set may be DCI that control scheduling of different user terminals or some or all of pieces of DCI may be DCI that controls scheduling of one user terminal.

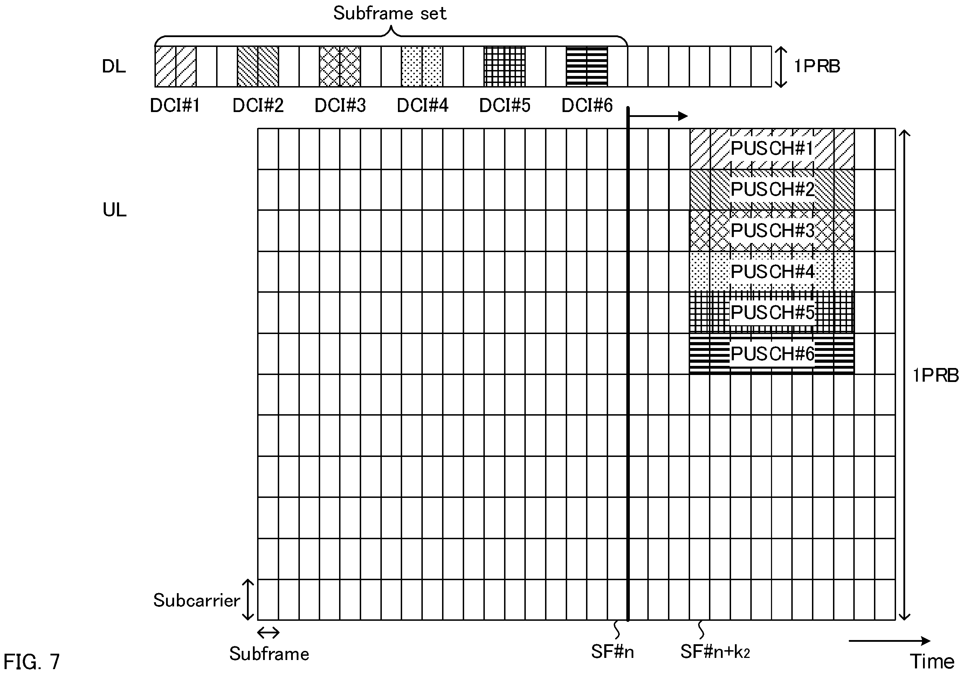

FIG. 7 is a diagram illustrating a case in which six pieces of DCI (DCI #1 to #6) are set in the same sub frame set and control is performed such that the transmission of the uplink data (PUSCHs #1 to #6) respectively scheduled by the six pieces of DCI are started at the same timing (allocation is started at the same position). More specifically, transmission of the UL data (PUSCHs #1 to #6) respectively scheduled by DCI #1 to #6 are started at a predetermined subframe. The predetermined subframe may be a subframe (for example, SF #n+k₂) after a predetermined period from the final subframe (for example, SF #n) of the subframe set. In this case, k₂ may be an integer larger than zero (for example, four).

The radio base station includes different pieces of UL allocation information (for example, UL data resource (subcarrier)) in the respective pieces of DCI (UL grant) that are included in the same subframe, and transmits the DCI to the user terminal. When receiving the DCI included in the subframe set, the user terminal starts UL data transmission at the predetermined subframe, irrespective of the subframe number in which the received DCI is included.

The user terminal determines an allocation resource (subcarrier) of the UL data, on the basis of the received DCI. In addition, the user terminal discriminates the timing of the final subframe (SF #n) of the subframe set, on the basis of information (for example, information relating to the subframe set) that is notified through the upper layer signaling and/or the DCI. Note that the information relating to the timing of the final subframe of the subframe set may be the number of subframes configuring the subframe set, offset that specifies position of the subframe set, and the like.

As mentioned above, performing control such that the transmission of the UL data scheduled by the respective pieces of DCI included in the same subframe data are started at the same timing makes it possible to transmit the plurality of pieces of UL data with use of different subcarriers that are overlapped with one another in the time region (subframe). This makes it possible to suppress generation of unused resources between the different pieces of UL data, as compared with the case (for example, FTG. 5, FTG.6, and other drawings) in which the transmission start timing of the respective pieces of UL data are determined on the basis of the reception timing of the respective pieces of DCI (for example, the received subframe number). This allows for improvement of the usage efficiency of resources.

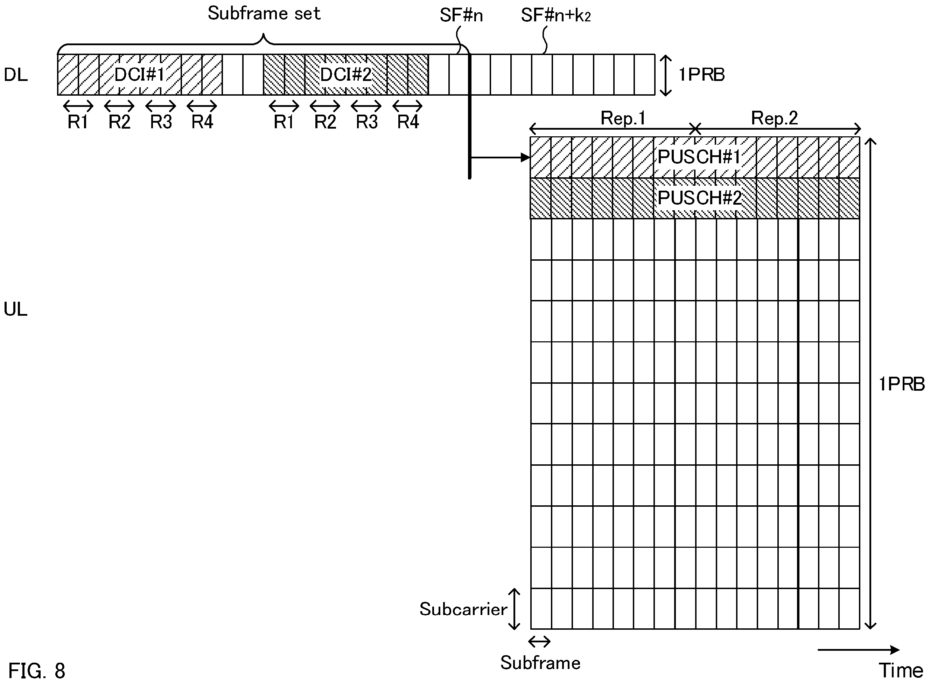

The present embodiment is applicable to the case of using the repetitive transmission (coverage enhancement). FIG. 8 is a diagram illustrating a case in which two pieces of DCI (DCI #1 and #2) to which the repetitive transmission (the repetition number is four) is applied are set in the same subframe set. Furthermore, the diagram of FIG. 8 illustrates a case of performing control such that the transmission of the uplink data (for example, PUSCHs #1 and #2) respectively scheduled by the two pieces of DCI are started at the same timing.

More specifically, control is performed to start, at a predetermined subframe, transmission of the UL data (PUSCHs #1 and #2) respectively scheduled by the DCI #1 and #2. The predetermined subframe may be a subframe (for example, SF #n+k₂) after a predetermined period from the final subframe (for example, SF #n) of the subframe set. In this example, k₂ may be a value larger than zero (for example, four).

The user terminal determines an allocation resource (subcarrier) of the UL data on the basis of the received DCI, and starts the UL data transmission at the predetermined subframe. In this example, the case in which the user terminal performs single-tone transmission of the UL data with the repetition number of 2. In this case, it is possible to suppress generation of unused resources between different pieces of uplink data. Note that the frequency of repetitive transmission applied to the uplink data that are respectively scheduled by different pieces of DCI in the same subframe set may be the same or may be different between the uplink data.

Note that, the case in which the predetermined subframe that becomes the transmission start timing of the UL data is determined on the basis of the final subframe of the subframe set is illustrated in FIG. 7 and FIG. 8; however, the present embodiment is not limited thereto. For example, the predetermined subframe may be determined on the basis of the subframe in which the final piece of DCI (downlink control channel) included in the subframe set is transmitted. Note that, as the final piece of DCI, only the DCI (UL grant) that schedules the UL transmission may be considered, or both of the DCI that schedules the UL transmission and the DCI (DL assignment) that schedules the DL transmission may be considered.

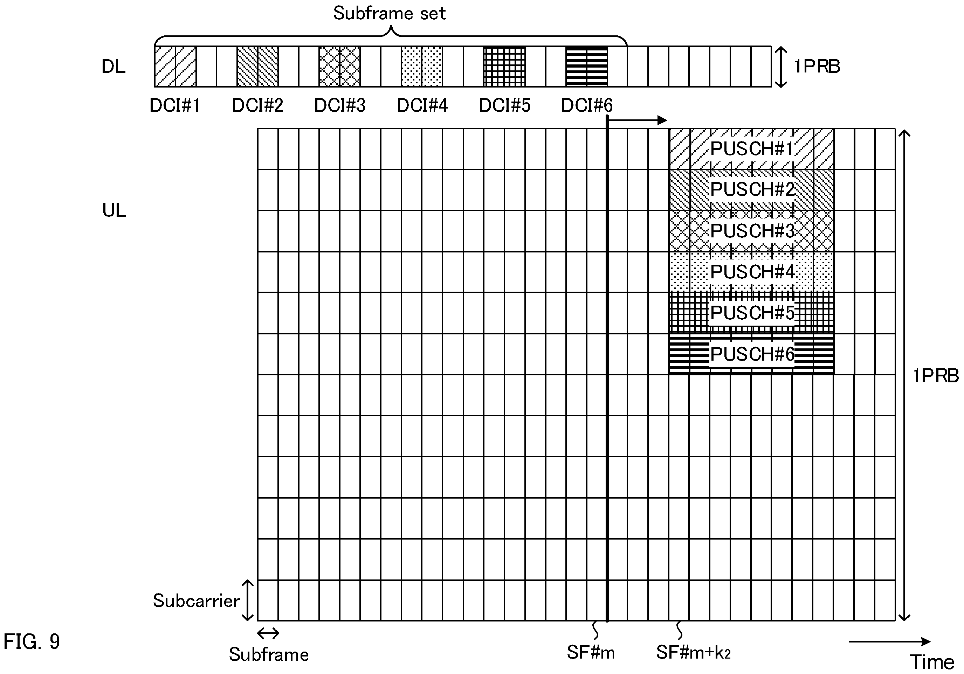

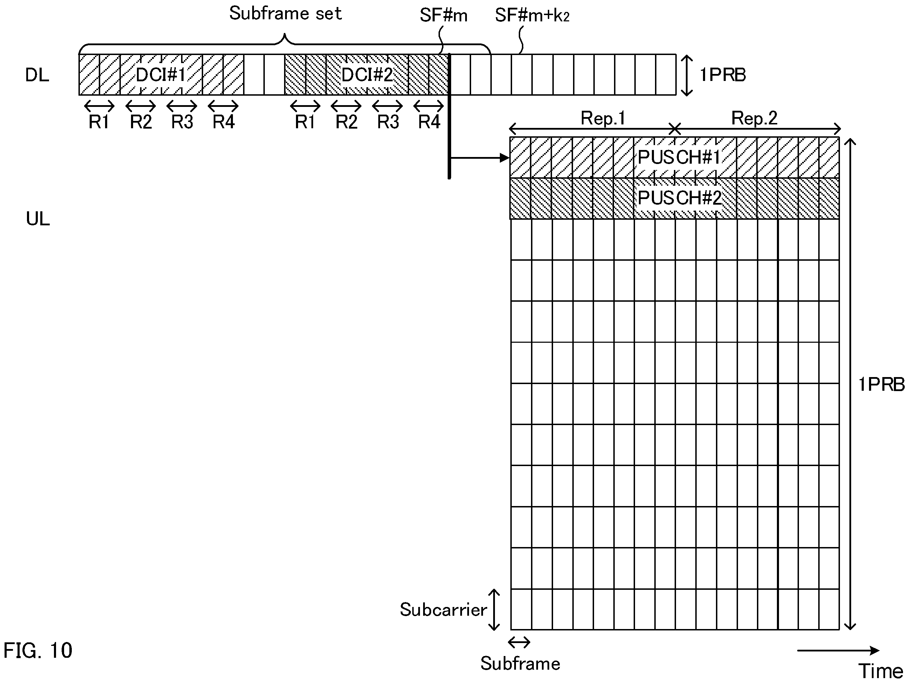

FIG. 9 and FIG. 10 are diagrams each illustrating the case in which the start timing of the UL transmission is determined on the basis of the subframe in which the final piece of DCI (the DCI #6) out of the plurality of pieces of DCI (DCI #1 to #6) included in the subframe set is transmitted. Note that the diagram of FIG. 9 illustrates the case of not using the repetitive transmission (normal coverage case) and the diagram of FIG. 10 illustrates the case of applying the repetitive transmission (enhanced coverage case).

The radio base station informs the user terminal of information relating to the subframe (SF #m) in which the final piece of DCI (DCI #6) included in the subframe set is transmitted, by including the information in the DCI (for example, DCI #1 to #6). The user terminal discriminates, on the basis of the information included in the DCI, a subframe (for example, SF #m) in which the DCI #6 is transmitted, and starts the UL transmission at a subframe (for example, SF #m+k₂) after a predetermined period from the subframe in which the DCI #6 is transmitted. In this example, k₂ may be a value larger than zero (for example, four).

As mentioned above, it is possible to transmit the plurality of pieces of UL data with use of different subcarriers that are overlapped with one another in the time region by performing control such that the transmission of the UL data scheduled by the respective pieces of DCI included in the same subframe set are started at the same timing. In addition, it is possible to advance the transmission start timing of the UL data as compared with the transmission start timing in FIG. 7 and FIG. 8, by determining the transmission start timing of the UL data on the basis of the transmission timing of the final piece of DCI included in the subframe set. As a result, it is possible to improve the usage efficiency of resources and to reduce delay.

Note that the radio base station may include, in the DCT, information relating to the predetermined subframe that becomes the start timing of the UL transmission, thereby notifying the user terminal of the information. The information relating to the predetermined subframe may be, for example, a predetermined subframe number itself or a subframe that is a reference to determine the predetermined subframe as long as the information helps to determine the predetermined subframe. In this case, the radio base station includes the information relating to the predetermined subframe in the respective pieces of DCI that are transmitted in the same subframe set, thereby transmitting the information to the user terminal.

### (Second Aspect)

In a second aspect, a case of controlling reception start timing of the downlink data that are scheduled by the respective pieces of DCI included in the subframe set, is described. Note that a case in which the downlink data is transmitted with multiple tones (a plurality of subcarriers (for example, one PRB)) is described below; however, the second aspect is applicable to a case in which the downlink data is transmitted with a single tone (a single subcarrier).

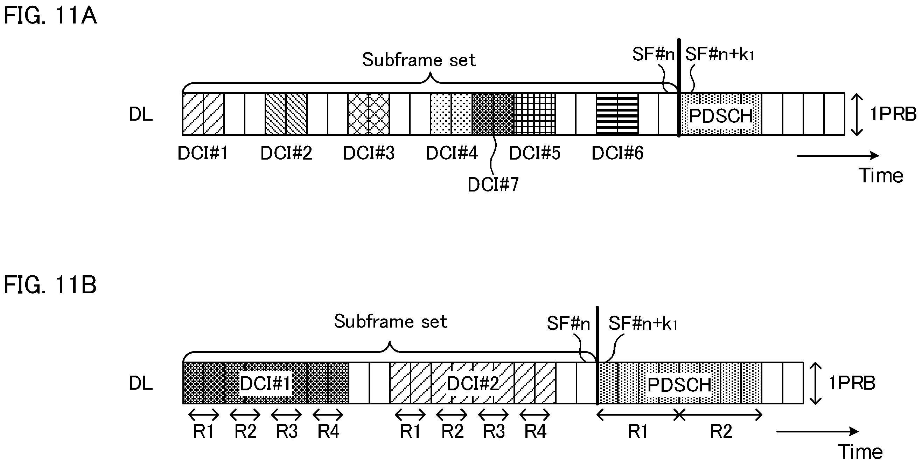

FIG. 11A is a diagram illustrating a case of setting seven pieces of DCI (DCI #1 to #7) in one subframe set. In this example, a case in which the uplink data are scheduled by six pieces of DCI (DCI #1 to #6) and the downlink data is scheduled by one piece of DCI (DCI #7) is assumed. In other words, the DCI #1 to #6 correspond to UL grant, and the DCI #7 corresponds to DL assignment. Note that the number of pieces of DCI for downlink scheduling and the number of pieces of DCI for uplink scheduling are not limited thereto.

As mentioned above, only one DL assignment may be included in one subframe set. In this case, it is possible to simplify allocation control when the DL data is transmitted with multiple carriers. Alternatively, a plurality of DL assignment may be included in one subframe set.

The user terminal starts reception of the DL data (PDSCH) scheduled by the DCI #7, at a predetermined subframe. The predetermined subframe may be a subframe (for example, SF #n+k₁) after predetermined period from the final subframe (for example, SF #n) of the subframe set. In this example, k₁ may be an integer larger than zero (for example, one). Note that the above-described first aspect is applicable to the transmission of the UL data (PUSCHs #1 to #6) that are respectively scheduled by the DCI #1 to #6.

The radio base station includes DL allocation information (for example, a resource for DL data (a subcarrier)) in the DCI (DL assignment) included in the subframe set, thereby transmitting the DL allocation information to the user terminal. The user terminal starts to receive the DL data at the predetermined subframe, irrespective of the subframe number in which the received DCI is included.

The user terminal determines an allocation resource (subcarrier) of the DL data, on the basis of the received DCI. In addition, the user terminal discriminates the timing of the final subframe (SF #n) of the subframe set, on the basis of information (for example, information relating to the subframe set) that is notified through the upper layer signaling and/or the DCI.

The present embodiment is applicable to the case of using the repetitive transmission (the coverage enhancement). FIG. 11B is a diagram illustrating a case in which two pieces of DCI (DCI #1 and #2) to which the repetitive transmission (the repetition number is four) is applied are set in the same subframe set. In addition, a case in which the downlink data is scheduled by the DCI #1 and the uplink data is scheduled by the DCI #2 is assumed. In other words, the DCI #1 corresponds to DL assignment and the DCI #2 corresponds to UL grant.

More specifically, the user terminal starts the reception of the DL data (PDSCH) that is scheduled by the DCI #1, at a predetermined subframe. The predetermined subframe may be a subframe (for example, SF #n+k₁) after the predetermined period from the final subframe (for example, SF #n) of the subframe set.

As mentioned above, in the second aspect, the reception start timing of the DL data that is scheduled by the DCI included in the subframe set is determined based not on the reception timing of the DCI (the reception subframe) but on the final subframe configuring the subframe set.

This makes it possible to suppress collision of the DCI (UL grant or DL assignment) included in the subframe set with the downlink data that is scheduled by the DL assignment. In addition, determining the reception timing on the basis of the final subframe of the subframe set (in particular, when k₁ is set to one) makes it possible to suppress generation of unused resources after the subframe set, which allows for efficient use of resources. Moreover, it is possible to start allocation of the DL data respectively scheduled by the DL assignment at the same position when the plurality of DL assignment are included in the subframe set.

Note that the case in which the predetermined subframe that becomes the reception start timing of the DL data is determined on the basis of the final subframe of the subframe set is illustrated in FIG. 11; however, the present embodiment is not limited thereto. For example, the predetermined subframe may be determined on the basis of the subframe in which the final piece of DCI (the downlink control channel) included in the subframe set is transmitted.

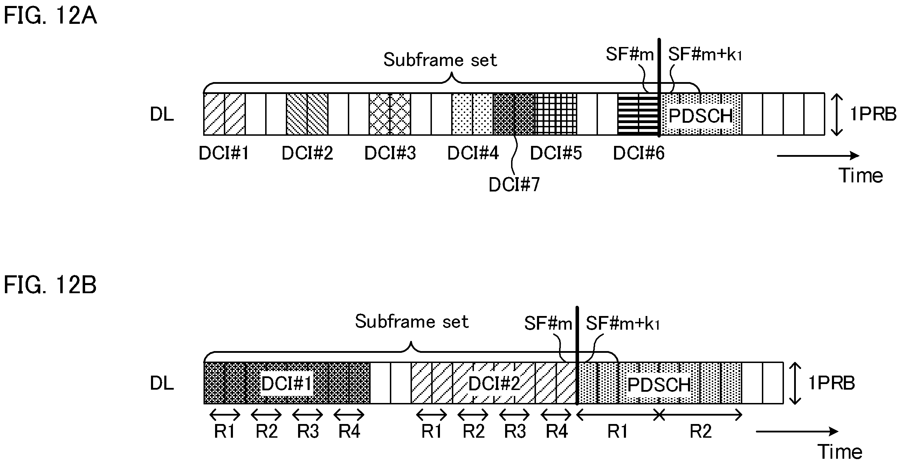

FIGs. 12A and 12B are diagrams each illustrating the case in which the reception start timing of the DL data is determined on the basis of the subframe in which the final piece (DCI #6 in FIG. 12A and DCI #2 in FIG. 12B) of the DCI (the DCI #1 to #7 in FIG. 12A and DCI #1 and #2 in FIG. 12B) included in the subframe set, is transmitted. Note that the diagram of FIG. 12A illustrates the case of not using the repetitive transmission (the normal coverage case), and the diagram of FIG. 12B illustrates the case of applying the repetitive transmission (the enhanced coverage case).

The radio base station includes, in the DCI (for example, DCI #1 to #6 in FIG. 12A), the information relating to the subframe (SF #m) in which the final piece of DCI included in the subframe set is transmitted, thereby notifying the user terminal of the information. The user terminal discriminates the subframe (for example, SF #m) in which the final piece of DCI is transmitted, on the basis of the information included in the DCI, and starts the UL transmission at a subframe (for example, SF #m+k₁) after the predetermined period from the subframe in which the final piece of DCI is transmitted. In this example, k₁ may be a value larger than zero (for example, one).

As mentioned above, controlling the reception start timing of the DL data that are scheduled by the respective pieces of DCI included in the subframe set makes it possible to suppress collision of the DCI included in the subframe set with the DL data. Moreover, it is possible to start the allocation of the DL data that are respectively scheduled by the DL assignment at the same position when the plurality of DL assignment are included in the subframe set. This makes it possible to suppress generation of unused resources and to improve the usage efficiency of resources.

Determining the reception start timing of the DL data on the basis of the transmission timing of the final piece of DCI included in the subframe set makes it possible to advance the reception (DL assignment) start timing of the DL data, as compared with the reception start timing in FIG. 11. As a result, it is possible to further improve the usage efficiency of resources and to reduce delay.

Note that the radio base station may include the information relating to the predetermined subframe that becomes the start timing of the DL transmission in the DCI and inform the user terminal of the information. The information relating to the predetermined subframe may be, for example, the predetermined subframe number itself or a subframe that is a reference to determine the predetermined subframe as long as the information helps to determine the predetermined subframe. In this case, the radio base station includes the information relating to the predetermined subframe in the respective pieces of DCI that are transmitted in the same subframe set, and transmits the DCI to the user terminal.

### (Radio communication System)

In the following, a configuration of a radio communication system according to an embodiment of the present invention is described. In the radio communication system, the radio communication method according to any of the above-described aspects is applied. Note that the radio communication methods according to the respective aspects may be used singularly or in combination. Although the NB-IoT equipment is exemplified here as a user terminal, a usable band of which is limited to the narrow band, the user terminal is not limited thereto.

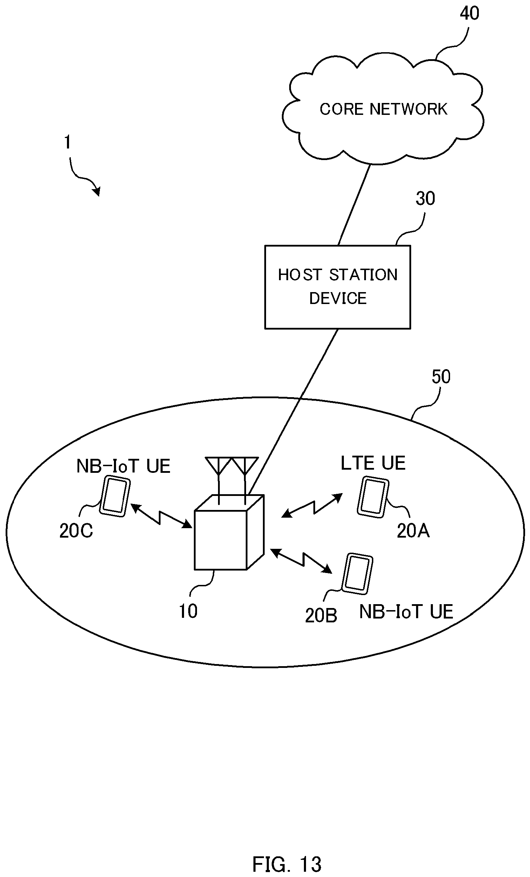

FIG. 13 is a schematic configuration diagram of the radio communication system according to the embodiment of the present invention. A radio communication system 1 illustrated in FIG. 13 is an example of a radio communication system in which the LTE system is adopted as a network domain of a machine communication system. In the radio communication system 1, carrier aggregation (CA) and/or duel connectivity (DC) in which a plurality of basic frequency blocks (component carriers) are aggregated is applied. Each of the basic frequency blocks uses the system bandwidth of the LTE system as one unit. In addition, it is assumed that the system band of the LTE system is set to a range from 1.4 MHz at a minimum up to 20 MHz at a maximum in both downlink and uplink; however, the system is not limited thereto.

Note that the radio communication system 1 may be also referred to as, for example, SUPER 3G, LTE-Advanced (LTE-A), IMT-Advanced, 4th generation mobile communication system (4G), 5th generation mobile communication system (5G), or future radio access (FRA).

The radio communication system 1 includes a radio base station 10 and a plurality of user terminals 20A, 20B, and 20C that are wirelessly connected to the radio base station 10. The radio base station 10 is connected to a host station device 30, and is connected to a core network 40 through the host station device 30. Note that the host station device 30 may include, for example, an access gateway device, a radio network controller (RNC), and a mobility management entity (MME) without limitation.

The plurality of user terminals 20 (20A to 20C) each communicate with the radio base station 10 in a cell 50. For example, the user terminal 20A is a user terminal that supports the LTE (up to Rel.10) or the LTE-Advanced (including Rel.10 and subsequent releases) (hereinafter, referred to as LTE user equipment (LTE UE)). Each of the user terminals 20B and 20C is NB-IoT user equipment (NB-IoT UE) serving as a communication device in machine communication system. In the following, when distinction is not particularly necessary, the user terminals 20A, 20B, and 20C are simply referred to as the user terminal 20. The user terminal 20 may be also referred to as, for example, user equipment (UE).

Each of the NB-IoT UE 20B and 20C is a user terminal, the usable band of which is limited to a bandwidth narrower than the minimum system bandwidth that is supported by the existing LTE system. Note that each of the NB-IoT UE 20B and 20C may be a terminal corresponding to various kinds of communication systems such as LTE and LTE-A, and may be a mobile communication terminal of a vehicle or the like without being limited to a stationary communication terminal such as an electricity meter, a gas meter, and an automatic vending machine. In addition, the user terminal 20 may communicate with the other user terminal 20 directly or through the radio base station 10.

In the radio communication system 1, as the radio access system, orthogonal frequency division multiple access (OFDMA) is adopted to the downlink, and single-carrier frequency division multiple access (SC-FDMA) is adopted to the uplink. The OFDMA is a multicarrier transmission system in which a frequency band is divided into a plurality of narrow frequency bands (subcarriers) and data are mapped to the respective subcarriers to perform communication. The SC-FDMA is a single-carrier transmission system in which a system bandwidth is divided into bands each configured of one resource block or successive resource blocks, for each terminal, and a plurality of terminals use the bands different from one another to reduce interference between terminals. Note that the radio access systems in the uplink and the downlink are not limited to these combinations.

In the radio communication system 1, for example, a physical downlink shared channel (PDSCH) that is shared between the user terminals 20, a physical broadcast channel (PBCH), and a downlink L1/L2 control channel are used as the downlink channel. User data, upper layer control information and a predetermined system information block (SIB) are transmitted through the PDSCH. In addition, a master information block (MIB) is transmitted through the PBCH.

The downlink L1/L2 control channel includes, for example, a physical downlink control channel (PDCCH), an enhanced physical downlink control channel (EPDCCH), a physical control format indicator channel (PCFICH), and a physical hybrid-ARQ indicator channel (PHICH). The downlink control information (DCI) including scheduling information of the PDSCH and the PUSCH and other information is transmitted through the PDCCH. The number of OFDM symbols used in the PDCCH is transmitted through the PCFICH. The hybrid automatic repeat request acknowledge (HARQ-ACK) of the PUSCH is transmitted through the PHICH. The EPDCCH is frequency-division multiplexed with the PDSCH, and is used for transmission of the DCI or other information, as with the PDCCH.

In the communication system 1, for example, a physical uplink shared channel that is shared between the user terminals 20, a physical uplink control channel (PUCCH), and a physical random access channel (PRACH) are used as the uplink channel. The PUSCH may be also referred to as an uplink data channel. User data and upper layer control information are transmitted through the PUSCH. In addition, for example, a channel quality indicator (CQI) of the downlink and the hybrid automatic repeat request acknowledge (HARQ-ACK) are transmitted through the PUCCH. A random access preamble to establish connection with the cell is transmitted through the PRACH.

Note that the channel for the MTC UE may be represented with "M" indicating MTC, and the channel for the NB-IoT UE may be represented with "NB" indicating NB-IoT. PDCCH/EPDCCH, PDSCH, PUCCH, PUSCH for the MTC UE (the NB-IoT UE) may be respectively referred to as M(NB)-PDCCH, M(NB)-PDSCH, M(NB)-PUCCH, and M(NB)-PUSCH. In the following, when distinction is not particularly necessary, those are simply referred to as PDCCH, PDSCH, PUCCH, and PUSCH.

In the radio communication system 1, for example, a cell-specific reference signal (CRS), a channel state information-reference signal (CST-RS), a demodulation reference signal (DMRS), and a positioning reference signal (PRS) are transmitted as a downlink reference signal. Moreover, in the radio communication system 1, for example, a sounding reference signal (SRS), and a demodulation reference signal (DMRS) are transmitted as an uplink reference signal. Note that the DMRS may be also referred to as a UE-specific reference signal. In addition, the reference signal to be transmitted is not limited to these signals.

### <Radio base station>

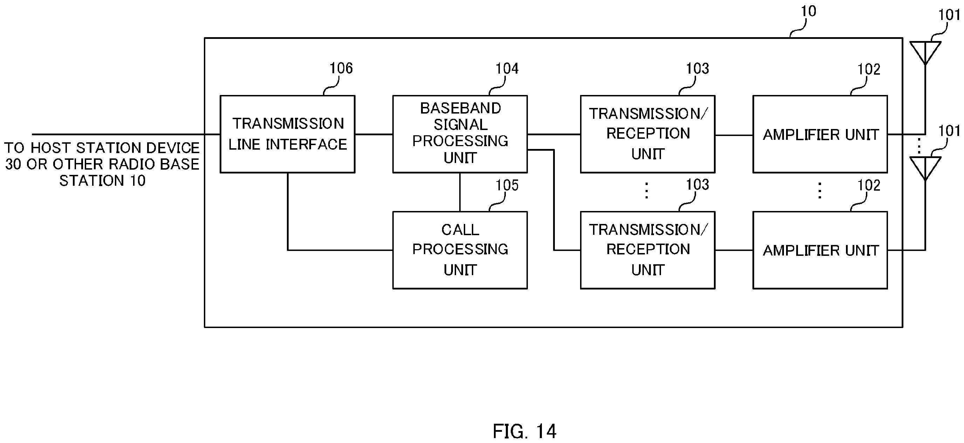

FIG. 14 is a diagram illustrating an example of an entire configuration of the radio base station according to the embodiment of the present invention. The radio base station 10 at least includes: a plurality of transmission/reception antennass 101; a plurality of amplifier units 102; a plurality of transmission/reception units (transmission/reception sections) 103; a baseband signal processing unit (baseband signal processing section) 104; a call processing unit (call processing section) 105; and a transmission line interface 106.

The user data that is transmitted from the radio base station 10 to the user terminal 20 through the downlink is provided from the host station device 30 to the baseband signal processing unit 104 through the transmission line interface 106.

The baseband signal processing unit 104 performs, on the user data, packet data convergence protocol (PDCP) layer processing, division and coupling of the user data, radio link control (RLC) layer transmission processing such as RLC retransmission control, medium access control (MAC) retransmission control (for example, transmission processing of hybrid automatic repeat request (HARQ)), scheduling, transmission format selection, channel encoding, inverse fast Fourier transform (IFFT) processing, and precoding processing, and the processed user data is then transferred to each of the transmission/reception units 103. In addition, transmission processing such as the channel encoding and the inverse fast Fourier transform is performed on the downlink control signal, and the processed signal is then transferred to each of the transmission/reception units 103.

Each of the transmission/reception units 103 converts the baseband signal that has been precoded for each antenna and provided from the baseband signal processing unit 104, into a signal of a radio frequency band, thereby transmitting the converted signal. Each of the transmission/reception unit 103 may be configured of a transmitter/receiver, a transmission/reception circuit, or a transmission/reception device that is described under common recognition in the technical field according to the present invention. Note that each of the transmission/reception units 103 may be configured as an integral transmission/reception unit or may be configured of a transmission unit and a reception unit.

The signal in the radio frequency band that has been converted in frequency by each of the transmission/reception units 103 is amplified by the corresponding amplifier unit 102, and the amplified signal is transmitted from the corresponding transmission/reception antenna 101. Each of the transmission/reception units 103 transmits and receives various kinds of signals with a narrow bandwidth (for example, 180 kHz) that is limited narrower than the system bandwidth (for example, one component carrier).

As for the uplink signal, the signal in radio frequency band that has been received by each of the transmission/reception antennae 101 is amplified by the corresponding amplifier unit 102. Each of the transmission/reception units 103 receives the uplink signal that has been amplified by the corresponding amplifier unit 102. Each of the transmission/reception units 103 converts, in frequency, the received signal into a baseband signal, and provides the baseband signal to the baseband signal processing unit 104.

The baseband signal processing unit 104 performs, on the user data included in the provided uplink signals, fast Fourier transform (FFT) processing, inverse discrete Fourier transform (IDFT) processing, error correction decoding, reception processing of MAC retransmission control, and reception processing of RLC layer and PDCP layer, and the processed signals are transferred to the host station device 30 through the transmission line interface 106. The call processing unit 105 performs call processing such as setting and releasing of the communication channel, state management of the radio base station 10, and management of radio resources.

The transmission line interface 106 transmits and receives a signal to and from the host station device 30 through a predetermined interface. Further, the transmission line interface 106 may transmit and receive a signal (perform backhaul signaling) to and from the other radio base station 10 through an inter-eNB interface (such as an optical fiber compliant with common public radio interface (CPRI) and X2 interface).

Each of the transmission/reception units (the transmission units) 103 transmits the downlink control information with use of the subframe set that is set for the downlink control channel in a predetermined bandwidth. Each of the transmission/reception units (the reception units) 103 receives the uplink data that is transmitted from the user terminal, on the basis of the downlink control information. Further, each of the transmission/reception units (the reception units) 103 may start to receive the uplink data that are scheduled by the respective pieces of downlink control information transmitted in the same subframe set, at a predetermined subframe.

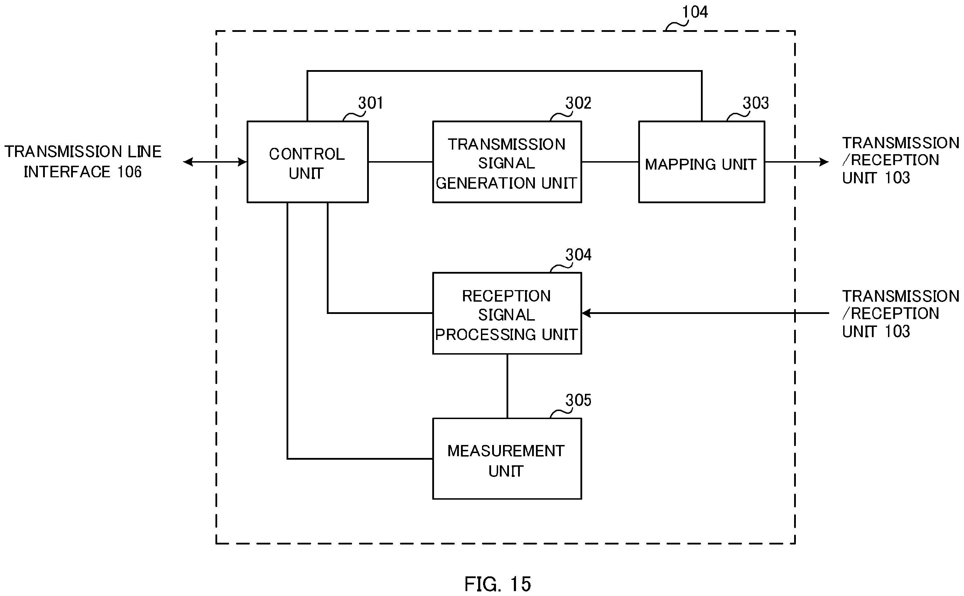

FIG. 15 is a diagram illustrating an example of a functional configuration of the radio base station according to the embodiment of the present invention. Note that, in FIG. 15, distinctive functional blocks in the present embodiment are mainly illustrated, and the radio base station 10 may further include other functional blocks necessary for the radio communication. As illustrated in FIG. 15, the baseband signal processing unit 104 at least includes: a control unit (control section) 301; a transmission signal generation unit (a generation unit) 302; a mapping unit 303; a reception signal processing unit 304; and a measurement unit 305.

The control unit 301 controls the entire radio base station 10. The control unit 301 may be configured of a controller, a control circuit, or a control device that is described under common recognition in the technical field according to the present invention.

For example, the control unit 301 controls signal generation by the transmission signal generation unit 302 and signal allocation by the mapping unit 303. Further, the control unit 301 controls reception processing of a signal by the reception signal processing unit 302 and measurement of a signal by the measurement unit 305. Furthermore, the control unit 301 controls resource allocation (scheduling) of system information, PDSCH, and PUSCH. In addition, the control unit 301 controls resource allocation of the downlink reference signal such as a synchronization signal (for example, primary synchronization signal (PSS)/secondary synchronization signal (SSS), and an NB-SS), a CRS, a CSI-RS, and a DM-RS.

The control unit 301 controls the transmission signal generation unit 302 and the mapping unit 303 to allocate the various types of signals to the narrow band and to transmit the various types of signals to the user terminals 20. The control unit 301 performs control to transmit, for example, the downlink broadcast information (MIB, SIB (MTC-SIB)), PDCCH (also referred to as, for example, M-PDCCH or NB-PDCCH), and PDSCH, in the narrow band. The narrow band (NB) is a band (for example, 180 kHz) narrower than the system band of the existing LTE system.

The control unit 301 receives the PUSCH with use of the determined PUSCH resource, in cooperation with the transmission/reception units 103, the reception signal processing unit 302, and the measurement unit 305. Moreover, the control unit 301 transmits the PDSCH with use of the determined PDSCH resource, in cooperation with the transmission signal generation unit 302, the mapping unit 303, and the transmission/reception units 103.

The transmission signal generation unit (the generation unit) 302 generates the downlink signal (such as the PDCCH, the PDSCH, and the downlink reference signal), in response to instruction from the control unit 301, and provides the generated downlink signal to the mapping unit 303. The transmission signal generation unit 302 may be configured of a signal generator, a signal generation circuit, or a signal generation device that is described under common recognition in the technical field according to the present invention.

The transmission signal generation unit 302 generates, for example, in response to instruction from the control unit 301, DCI (also referred to as, for example, DL assignment or UL grant) that allocates the PUSCH and/or the PDSCH to the user terminals 20. In addition, encoding processing and modulation processing are performed on the PDSCH, in accordance with, for example, an encoding rate and modulation method that are determined on the basis of the channel state information (CSI) or other information from the respective user terminals 20.

The mapping unit 303 maps the downlink signal generated in the transmission signal generation unit 302, to the radio resource (for example, one resource block at a maximum) of the predetermined narrow band, in response to instruction from the control unit 301, and provides the downlink signal to the transmission reception units 103. The mapping unit 303 may be configured of a mapper, a mapping circuit, or a mapping device that is described under common recognition in the technical field according to the present invention.

The reception signal processing unit 304 performs reception processing (such as demapping, demodulation, and decoding) on the reception signal provided from each of the transmission/reception units 103. The reception signal may be, for example, the uplink signal (such as the PUCCH, the PUSCH, and the uplink reference signal) transmitted from the user terminals 20. The reception signal processing unit 304 may be configured of a signal processor, a signal processing circuit, or a signal processing device that is described under common recognition in the technical field according to the present invention.

The reception signal processing unit 304 provides information decoded through the reception processing, to the control unit 301. In addition, the reception signal processing unit 304 provides the reception signal and the reception-processed signal to the measurement unit 305.

The measurement unit 305 performs measurement relating to the received signal. The measurement unit 305 may be configured of a measurement instrument, a measurement circuit, or a measurement device that is described under common recognition in the technical field according to the present invention.

The measurement unit 305 may measure, for example, reception power of the signal (for example, reference signal received power (RSRP)), reception quality of the signal (for example, reference signal received quality (RSRQ)), and the channel state. A measurement result may be provided to the control unit 301.

### <User Terminal>

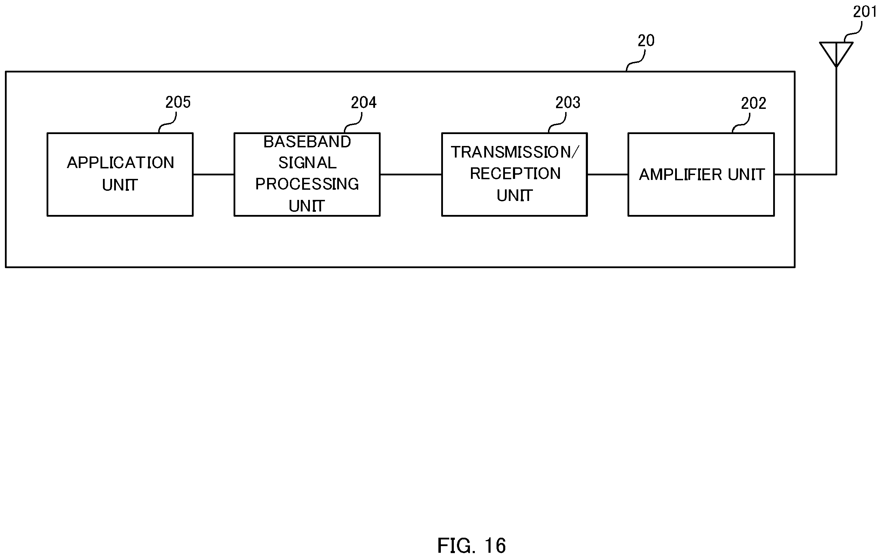

FIG. 16 is a diagram illustrating an example of an entire configuration of the user terminal according to the embodiment of the present invention. Note that, although detailed description is omitted, a normal LTE UE may operate to behave as an NB-IoT UE. The user terminal 20 at least includes: a transmission/reception antenna 201; an amplifier unit 202; a transmission/reception unit 203; a baseband signal processing unit 204; and an application unit 205. The user terminal 20 may include, for example, a plurality of transmission/reception antennas 201, a plurality of amplifier units 202, and a plurality of transmission/reception units (transmission/reception section) 203.

The radio frequency signal received by the transmission/reception antenna 201 is amplified by the amplifier unit 202. The transmission/reception unit 203 receives the downlink signal amplified by the amplifier unit 202.

The transmission reception unit 203 performs frequency conversion on the reception signal to convert the reception signal into the baseband signal, and provides the baseband signal to the baseband signal processing unit 204. The transmission/reception unit 203 may be configured of a transmitter/receiver, a transmission/reception circuit, or a transmission/reception device that is described under common recognition in the technical field according to the present invention. Note that the transmission/reception unit 203 may be configured as an integral transmission/reception unit or may be configured of a transmission unit and a reception unit.

The baseband signal processing unit 204 performs FFT processing, error correction decoding, reception processing of retransmission control, and other processing on the provided baseband signal. The downlink user data is transferred to the application unit 205. The application unit 205 performs processing relating to a layer upper than the physical layer and the MAC layer. In addition, the broadcast information of the downlink data is also transferred to the application unit 205.

In contrast, the uplink user data is provided from the application unit 205 to the baseband signal processing unit 204. The baseband signal processing unit 204 performs transmission processing of the hybrid automatic repeat request acknowledge (HARQ-ACK), channel encoding, precoding, discrete Fourier transform (DFT) processing, IFFT processing, and other processing, on the uplink user data, and the processed data is transferred to the transmission/reception unit 203.

The transmission/reception unit 203 converts the baseband signal provided from the baseband signal processing unit 204, into a signal of the radio frequency band, and transmits the signal of the radio frequency band. The radio frequency signal converted in frequency by the transmission/reception unit 203 is amplified by the amplifier unit 202, and the amplified signal is transmitted from the transmission/reception antenna 201.

The transmission/reception unit (the reception unit) 203 receives the downlink control information included in the sub frame set that is set for the downlink control channel in a predetermined bandwidth. Moreover, the transmission/reception unit (the reception unit) 203 receives the downlink control information including information relating to the final sub frame to which the downlink control channel is allocated in the subframe set. Furthermore, the transmission/reception unit (the reception unit) 203 receives information relating to the subframe set.

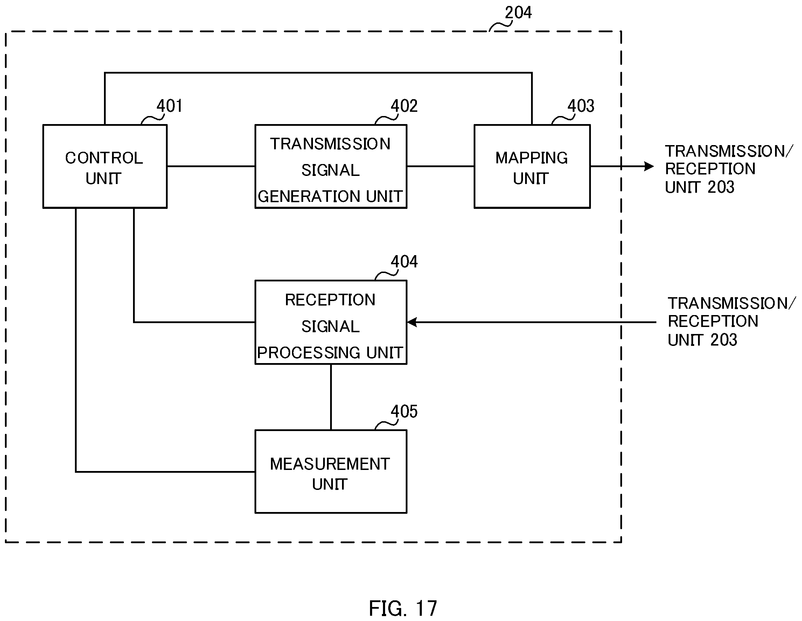

FIG. 17 is a diagram illustrating an example of a functional configuration of the user terminal according to the embodiment of the present invention. Note that, in FIG. 17, distinctive functional blocks in the present embodiment are mainly illustrated, and the user terminal 20 may further include other functional blocks necessary for the radio communication. As illustrated in FTG. 17, the baseband signal processing unit 204 included in the user terminal 20 at least includes: a control unit (control section) 401; a transmission signal generation unit (a generation unit) 402; a mapping unit 403; a reception signal processing unit 404; and a measurement unit 405.

The control unit 401 controls the entire user terminal 20. The control unit 401 may be configured of a controller, a control circuit, or a control device that is described under common recognition in the technical field according to the present invention.

For example, the control unit 401 controls signal generation by the transmission signal generation unit 402 and signal allocation by the mapping unit 403. In addition, the control unit 401 controls signal reception processing by the reception signal processing unit 404 and signal measurement by the measurement unit 405.

The control unit 401 acquires, from the reception signal processing unit 404, the downlink signal (such as the PDCCH, the PDSCH, and the downlink reference signal) transmitted from the radio base station 10. The control unit 401 controls generation of the uplink control information (UCI) such as the hybrid automatic repeat request acknowledge (HARQ-ACK) and the channel state information (CSI) and generation of the uplink data, on the basis of the downlink signal.

The control unit 401 controls the uplink data transmission, on the basis of the downlink control information. For example, the control unit 401 performs control to start the uplink data transmission that are scheduled by the respective pieces of downlink control information included in the same subframe set, at a predetermined subframe. More specifically, the control unit 401 starts the uplink data transmission that is scheduled by the respective pieces of downlink control information included in the same subframe set, at a subframe after a predetermined period from the final subframe of the subframe set (refer to FIG. 7 and FIG. 8).

The control unit 401 starts the uplink data transmission that is scheduled by the respective pieces of downlink control information included in the same subframe set, at a subframe after a predetermined period from the final subframe to which the downlink control channel is allocated, of the subframe set (refer to FIG. 9 and FIG. 10).

The control unit 401 repeatedly performs the uplink data transmission that is scheduled by the respective pieces of downlink control information included in the same subframe set, at a predetermined subframe. Moreover, the control unit 401 performs control to perform the uplink data transmission that is scheduled by the respective pieces of downlink control information included in the same subframe set, with use of the single carrier. Note that the uplink data scheduled by the downlink control information included in the subframe set may be allocated to different subcarriers in the same PRB.

The control unit 401 performs control to start the downlink data reception that is scheduled by the downlink control information included in the subframe set, at a predetermined subframe (refer to FIG. 11 and FIG. 12).

The control unit 401 transmits the PUSCH with use of the PUSCH resource, in cooperation with the transmission signal generation unit 402, the mapping unit 403, and the transmission/reception unit 203. Furthermore, the control unit 401 receives the PDSCH with use of the PDSCH resource, in cooperation with the transmission/reception unit 203, the reception signal processing unit 404, and the measurement unit 405.

The transmission signal generation unit 402 generates the uplink signal (such as the PUCCH, the PUSCH, and the uplink reference signal), on the basis of instruction from the control unit 401, and provides the generated uplink signal to the mapping unit 403. The transmission signal generation unit 402 may be configured of a signal generator, a signal generation circuit, or a signal generation device that is described under common recognition in the technical field according to the present invention.

The transmission signal generation unit 402 generates, for example, in response to instruction from the control unit 401, the uplink control information (UCI) and/or the uplink data. In addition, the transmission signal generation unit 402 generates, in response to instruction from the control unit 401, the PUSCH through which the UCT and/or the uplink data is transmitted. For example, when the user terminal 20 receives the DCI to which the PUSCH is allocated, the transmission signal generation unit 402 receives instruction of PUSCH generation from the control unit 401. Further, the transmission signal generation unit 402 generates, in response to instruction from the control unit 401, the PUCCH through which the UCI is transmitted.

The mapping unit 403 maps the uplink signal generated in the transmission signal generation unit 402 to the resource (for example, the PUSCH resource and the PUCCH resource) in response to instruction from the control unit 401, and provides the uplink signal to the transmission/reception unit 203. The mapping unit 403 may be configured of a mapper, a mapping circuit, or a mapping device that is described under common recognition in the technical field according to the present invention.

The reception signal processing unit 404 performs reception processing (such as demapping, demodulation, and decoding) on the reception signal provided from the transmission/reception unit 203. The reception signal may be, for example, the downlink signal (such as the downlink control signal, the downlink data signal, and the downlink reference signal) transmitted from the radio base station 10. The reception signal processing unit 404 may be configured of a signal processor, a signal processing circuit, or a signal processing device that is described under common recognition in the technical field according to the present invention.

The reception signal processing unit 404 provides information decoded through the reception processing, to the control unit 401. The reception signal processing unit 404 provides, for example, the broadcast information, the system information, the RRC signaling, and the DCI, to the control unit 401. In addition, the reception signal processing unit 404 provides the reception signal and the reception-processed signal, to the measurement unit 405.

The measurement unit 405 performs measurement relating to the received signal. The measurement unit 405 may be configured of a measurement instrument, a measurement circuit, or a measurement device that is described under common recognition in the technical field according to the present invention.

The measurement unit 405 may measure, for example, reception power of the received signal (for example, RSRP), reception quality of the received signal (for example, RSRQ), and the channel state. A measurement result may be provided to the control unit 401.

### <Hardware Configuration>

Note that the block diagrams used in the above-described description of the embodiments each illustrate blocks of a functional unit. The functional blocks (components) are realized by optional combination of hardware and/or software. In addition, the respective functional blocks may be realized in an optional manner without particular limitation. In other words, the functional blocks may be realized by one device physically coupled, or may be realized by two or more devices that are physically separated from one another but are connected to one another through wired or radio connection.

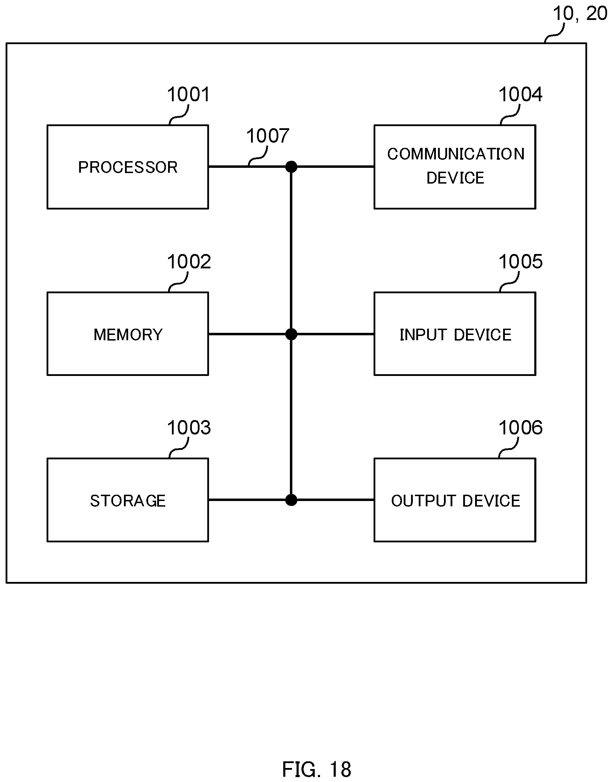

For example, the radio base station and the user terminal according to the embodiment of the present invention may function as a computer that performs processing of the radio communication method according to the present invention. FIG. 18 is a diagram illustrating an example of a hardware configuration of the radio base station and the user terminal according to the embodiment of the present invention. The radio base station 10 and the user terminal 20 mentioned above may be physically configured as a computer apparatus that includes a processor 1001, a memory 1002, a storage 1003, a communication device 1004, an input device 1005, an output device 1006, a bus 1007, and other components.

Note that, in the following description, the term "device" may be replaced with, for example, a circuit, an apparatus, or a unit. The hardware configuration of the radio base station 10 and the user terminal 20 may include one or a plurality of the respective illustrated devices, or may not include a portion of devices.

The respective functions of the radio base station 10 and the user terminal 20 are realized by loading predetermined software (program) to hardware such as the processor 1001 and the memory 1002 to cause the processor 1001 to execute arithmetic, and controlling communication by the communication device 1004 and reading and/or writing of data in the memory 1002 and the storage 1003.

For example, the processor 1001 operates an operating system to control the entire computer. The processor 1001 may be configured of a central processing unit (CPU) that includes, for example, an interface with peripheral apparatuses, a control device, an arithmetic device, and a register. For example, the baseband signal processing unit 104 (204) and the call processing unit 105 mentioned above may be realized by the processor 1001.

The processor 1001 loads programs (program codes), software modules, and data from the storage 1003 and/or the communication device 1004 to the memory 1002, thereby executing various types of processes according thereto. As the program, a program that causes the computer to execute at least a portion of operations described in the above-described embodiment, is used. For example, the control unit 401 of the user terminal 20 may be realized by a control program that is held by the memory 1002 and operated by the processor 1001, and other functional blocks may be similarly realized.

The memory 1002 is a computer-readable recording medium that is configured of one or more of, for example, a read-only memory (ROM), an erasable programmable ROM (EPROM), and a random access memory (RAM). The memory 1002 may be referred to as, for example, a register, a cache, or a main memory (a main memory device). The memory 1002 holds, for example, programs (program codes) and software modules that are executable to implement the radio communication method according to the embodiment of the present invention.

The storage 1003 is a computer-readable recording medium that is configured of one or more of, for example, an optical disc such as a compact disc ROM (CD-ROM), a hard disk drive, a flexible disk, a magneto-optical disk, and a flash memory. The storage 1003 may be referred to as an auxiliary memory device.

The communication device 1004 is hardware (a transmission/reception device) that performs communication between computers through a wired and/or radio network, and is also referred to as, for example, a network device, a network controller, a network card, or a communication module. For example, the transmission/reception antenna 101 (201), the amplifier unit 102 (202), the transmission/reception unit 103 (203), and the transmission line interface 106 may be each realized by the communication device 1004.

The input device 1005 is an input device (such as a keyboard and a mouse) that receives input from outside. The output device 1006 is an output device (such as a display and a speaker) that executes output to the outside. Note that the input device 1005 and the output device 1006 may be integrally configured (for example, a touch panel).

The devices such as the processor 1001 and the memory 1002 are connected to one another through the bus 1007 for information communication. The bus 1007 may be configured of a single bus or buses different between devices.

The radio base station 10 and the user terminal 20 may include hardware such as a microprocessor, a digital signal processor (DSP), an application specific integrated circuit (ASIC), a programmable logic device (PLD), and a field programmable gate array (FPGA), and a portion or all of the functional blocks may be realized by the hardware. For example, the processor 1001 may be implemented by at least one hardware.

Note that terms described in the present specification and/or the terms necessary for understanding of the present specification may be replaced with terms that have the same or similar meanings. For example, the channel and/or the symbol may be a signal (signaling). Further, the signal may be a message. The component carrier (CC) may be referred to as, for example, a cell, a frequency carrier, or a carrier frequency.

The radio frame may be configured of one or a plurality of periods (frames) in a time region. The one or the plurality of periods (frames) configuring the radio frame may be each referred to as a subframe. Further, the subframe may be configured of one or a plurality of slots in the time region. Furthermore, the slot may be configured of one or a plurality of symbols (such as OFDM symbols and SC-FDMA symbols) in the time region.

The radio frame, the subframe, the slot, and the symbol all represent a time unit in transmission of the signal. Other names respectively corresponding to the radio frame, the subframe, the slot, and the symbol may be used. For example, one subframe may be referred to as a transmission time interval (TTI), a plurality of successive subframes may be referred to as the TTI, or one slot may be referred to as the TTI. In other words, the subframe and the TTI may be a subframe (1 ms) in the existing LTE, may be a period shorter than 1 ms (for example, 1 to 13 symbols), or a period longer than 1 ms.

The TTI indicates, for example, a minimum time unit of scheduling in the radio communication. For example, in the LTE system, the radio base station performs scheduling to allocate the radio resources (for example, a frequency bandwidth, a transmission power, and the like that are usable in each user terminal) to the user terminals by the TTI unit. Note that the definition of the TTI is not limited thereto.

The TTI having a time length of 1 ms may be referred to as, for example, a typical TTI (TTI in LTE Rel.8 to 12), a normal TTI, a long TTI, a typical subframe, a normal subframe, or a long subframe. The TTI shorter than the typical TTI may be referred to as, for example, a shortened TTI, a short TTI, a shortened subframe, or a short subframe.

The resource block (RB) is a resource allocation unit in the time region and the frequency region. The resource block may include one or a plurality of successive subcarriers in the frequency region. In addition, the RB may include, in the time region, one or a plurality of symbols and may have a length of one slot, one subframe, or one TTI. One TTI and one subframe may be each configured of one or a plurality of resource blocks. Note that the RB may be referred to as, for example, a physical RB (PRB), a PRB pair, or a RB pair.

In addition, the resource block may be configured of one or a plurality of resource elements (REs). For example, one RE may be a radio resource region of one subcarrier or one symbol.

Note that the configurations of the radio frame, the subframe, the slot, and the symbol described above are merely exemplified. For example, the number of subframes included in the radio frame, the number of slots included in the subframe, the number of symbols and RBs included in the slot, the number of subcarriers included in the RB, the number of symbols in the TTI, the symbol length, and the cyclic prefix (CP) length may be variously varied.

The information, the parameters, and the like described in the present specification may be represented by an absolute value, a relative value from a predetermined value, or corresponding different information. For example, the radio resource may be indicated by a predetermined index.

The information, the signals, and the like described in the present specification may be represented with use of any of various different technologies. For example, the data, the instruction, the command, the information, the signal, the bit, the symbol, and the chip that are mentioned over the above-described entire description may be represented by a voltage, a current, an electromagnetic wave, a magnetic field or a magnetic particle, an optical field or a photon, or any combination thereof.

The software, the instruction, the information, and the like may be transmitted and received through a transmission medium. For example, when the software is transmitted from a website, a server, or other remote source with use of a wired technology (such as a coaxial cable, an optical fiber cable, a twist pair, or a digital subscriber line (DSL)) and/or a radio technology (such as infrared rays or microwaves), the wired technology and/or the radio technology are encompassed in the definition of the transmission medium.

The radio base station in the present specification may be replaced with the user terminal. For example, the respective aspects/embodiment of the present invention may be applied to a configuration in which communication between the radio base station and the user terminal is replaced with device-to-device (D2D) communication. In this case, the user terminal 20 may include the above-described functions of the radio base station 10. In addition, the terms of "uplink" and "downlink" may be replaced with "side". For example, the uplink channel may be replaced with a side channel.

Likewise, the user terminal in the present specification may be replaced with the radio base station. In this case, the radio base station may include the above-described functions of the user terminal 20.

The respective aspects/embodiment described in the present specification may be used singularly or in combination, or may be changed over according to execution. Notification of predetermined information (for example, notification of "being X") is not limited to notification explicitly performed, and may be implicitly performed (for example, through not performing notification of the predetermined information).

The notification of information is not limited to those in the respective aspects/embodiment described in the present specification, and may be performed in other manner. For example, the notification of information may be performed by physical layer signaling (for example, downlink control information (DCI) or uplink control information (UCI)), upper layer signaling (for example, radio resource control (RRC) signaling, broadcast information (master information block (MIB) or system information block (SIB)), medium access control (MAC) signaling), other signals, or any combination thereof. In addition, the RRC signaling may be referred to as an RRC message such as RRC connection setup message and an RRC connection reconfiguration message. The MAC signaling may be informed by, for example, an MAC control element (CE).

The respective aspects/embodiment described in the present specification may be applied to long term evolution (LTE), LTE-Advanced (LTE-A), LTE-beyond (LTE-B), SUPER 3G, IMT-Advanced, 4th generation mobile communication system (4G), 5th generation mobile communication system (5G), future radio access (FRA), New-radio access technology (RAT), CDMA2000, ultra mobile broadband (UMB), IEEE 802.11 (Wi-Fi (registered trademark)), IEEE 802.16 (WiMax (registered trademark)), IEEE 802.20, ultra-wideband (UWB), Bluetooth (registered trademark), a system using other appropriate radio communication system, and/or a next generation system that is enhanced on the basis thereof.

The order of the process procedure, the sequence, the flowchart, and the like of the respective aspects/embodiment described in the present specification may be changed in so far as incompatibility does not occur. For example, the method described in the present specification presents various step elements in an illustrative order, and is not limited to the presented specific order.

Although the present invention has been described in detail, it is obvious for those skilled in the art that the present invention is not limited to the embodiments described in the present specification. The present invention is defined by the appended claims. Accordingly, the description of the present specification is merely exemplary and does not impose any limitations to the present invention.

## Claims

1. A user terminal (20) comprising:
a reception unit (203) configured to receive downlink control information on a downlink control channel included in a given duration in a given bandwidth; and
a control unit (401) configured to control uplink data transmission based on the downlink control information,
wherein the control unit (401) is configured to control start timing of the uplink data transmission with reference to a last subframe in which the downlink control channel is transmitted in the given duration; and
wherein the control unit (401) is configured to determine the last subframe in which the downlink control channel is transmitted in the given duration, based on information provided by the downlink control information.

2. The user terminal (20) according to claim 1, wherein the control unit (401) is configured to determine the start timing of the uplink data transmission based on information provided by the downlink control information included in the given duration.

3. The user terminal (20) according to either one of claims 1 to 2, wherein the downlink control information is transmitted repeatedly over different subframes.

4. A user terminal (20) comprising:
a reception unit (203) configured to receive downlink control information on a downlink control channel included in a given duration in a given bandwidth; and
a control unit (401) configured to control downlink data reception based on the downlink control information,
wherein the control unit (401) is configured to control start timing of the downlink data reception with reference to a last subframe in which the downlink control channel is transmitted in the given duration; and
wherein the control unit (401) is configured to determine the last subframe in which the downlink control channel is transmitted in the given duration, based on information provided by the downlink control information.

5. A radio base station (10) comprising:
a transmission unit (103) configured to transmit downlink control information by using a downlink control channel included in a given duration in a given bandwidth; and
a reception unit (103) configured to receive uplink data transmitted from at least one user terminal (20) based on the downlink control information,
wherein the transmitting unit (103) provides information about a last subframe in which the downlink control channel is transmitted in the given duration, by using the downlink control information; and
wherein the reception unit (103) is configured to control start timing of uplink data reception with reference to a last subframe in which the downlink control channel is transmitted in the given duration.

6. A radio communication method for a user terminal (20), comprising:
receiving downlink control information on a downlink control channel included in a given duration in a given bandwidth; and
controlling uplink data transmission based on the downlink control information,
wherein the user terminal (20) determines the last subframe in which the downlink control channel is transmitted in the given duration, based on information provided by the downlink control information; and
wherein the user terminal (20) controls start timing of the uplink data transmission with reference to a last subframe in which the downlink control channel is transmitted in the given duration.

## Patentansprüche

1. Benutzerendgerät (20), umfassend:
eine Empfangseinheit (203), die so konfiguriert ist, dass die Downlink-Steuerinformationen auf einem Downlink-Steuerkanal empfängt, der in einer gegebenen Dauer in einer gegebenen Bandbreite eingeschlossen ist; und
eine Steuereinheit (401), die so konfiguriert ist, dass sie die Uplink-Datenübertragung auf der Grundlage der Downlink-Steuerinformationen steuert,
wobei die Steuereinheit (401) so konfiguriert ist, dass sie den Startzeitpunkt der Uplink-Datenübertragung mit Bezug auf einen letzten Subrahmen steuert, in dem der Downlink-Steuerkanal in der gegebenen Dauer übertragen wird; und
wobei die Steuereinheit (401) so konfiguriert ist, dass sie den letzten Subrahmen bestimmt, in dem der Downlink-Steuerkanal in der gegebenen Dauer übertragen wird, auf der Grundlage von Informationen, die von den Downlink-Steuerinformationen bereitgestellt werden.

2. Benutzerendgerät (20) nach Anspruch 1, wobei die Steuereinheit (401) so konfiguriert ist, dass sie den Startzeitpunkt der Uplink-Datenübertragung auf der Grundlage von Informationen bestimmt, die von den in der gegebenen Dauer eingeschlossenen Downlink-Steuerinformationen bereitgestellt werden.

3. Benutzerendgerät (20) nach einem der Ansprüche 1 bis 2, wobei die Downlink-Steuerinformationen wiederholt über verschiedene Subrahmen übertragen werden.

4. Benutzerendgerät (20), umfassend:
eine Empfangseinheit (203), die so konfiguriert ist, dass sie Downlink-Steuerinformationen auf einem Downlink-Steuerkanal empfängt, der in einer gegebenen Dauer in einer gegebenen Bandbreite eingeschlossen ist; und
eine Steuereinheit (401), die so konfiguriert ist, dass sie den Downlink-Datenempfang auf der Grundlage der Downlink-Steuerinformationen steuert,
wobei die Steuereinheit (401) so konfiguriert ist, dass sie den Startzeitpunkt des Downlink-Datenempfangs mit Bezug auf einen letzten Subrahmen steuert, in dem der Downlink-Steuerkanal in der gegebenen Dauer übertragen wird; und
wobei die Steuereinheit (401) so konfiguriert ist, dass sie den letzten Subrahmen bestimmt, in dem der Downlink-Steuerkanal in der gegebenen Dauer übertragen wird, auf der Grundlage von Informationen, die von den Downlink-Steuerinformationen bereitgestellt werden.

5. Funkbasisstation (10), umfassend:
eine Übertragungseinheit (103), die so konfiguriert ist, dass sie Downlink-Steuerinformationen unter Verwendung eines Downlink-Steuerkanals überträgt, der in einer gegebenen Dauer in einer gegebenen Bandbreite eingeschlossen ist; und
eine Empfangseinheit (103), die so konfiguriert ist, dass sie Uplink-Daten empfängt, die von mindestens einem Benutzerendgerät (20) auf der Grundlage der Downlink-Steuerinformationen übertragen werden,
wobei die Übertragungseinheit (103) unter Verwendung der Downlink-Steuerinformationen Informationen über einen letzten Subrahmen bereitstellt, in dem der Downlink-Steuerkanal in der gegebenen Dauer übertragen wird; und
wobei die Empfangseinheit (103) so konfiguriert ist, dass sie den Startzeitpunkt des Uplink-Datenempfangs mit Bezug auf einen letzten Subrahmen steuert, in dem der Downlink-Steuerkanal in der gegebenen Dauer übertragen wird.

6. Funkkommunikationsverfahren für ein Benutzerendgerät (20), umfassend:
Empfangen von Downlink-Steuerinformationen auf einem Downlink-Steuerkanal, der in einer gegebenen Dauer in einer gegebenen Bandbreite eingeschlossen ist; und
Steuern der Uplink-Datenübertragung auf der Grundlage der Downlink-Steuerinformationen,
wobei das Benutzerendgerät (20) den letzten Subrahmen bestimmt, in dem der Downlink-Steuerkanal in der gegebenen Dauer übertragen wird, auf der Grundlage von Informationen, die von den Downlink-Steuerinformationen bereitgestellt werden; und
wobei das Benutzerendgerät (20) den Startzeitpunkt der Uplink-Datenübertragung mit Bezug auf einen letzten Subrahmen steuert, in dem der Downlink-Steuerkanal in der gegebenen Dauer übertragen wird.

## Revendications

1. Terminal utilisateur (20) comprenant :
une unité de réception (203) configurée pour recevoir des informations de commande en liaison descendante sur un canal de commande en liaison descendante inclus dans une durée donnée dans une bande passante donnée ; et
une unité de commande (401) configurée pour commander une transmission de données en liaison montante sur la base des informations de commande en liaison descendante,
dans lequel l'unité de commande (401) est configurée pour commander une synchronisation de début de la transmission de données en liaison montante avec une référence à une dernière sous-trame dans laquelle le canal de commande en liaison descendante est transmis dans la durée donnée ; et
dans lequel l'unité de commande (401) est configurée pour déterminer la dernière sous-trame dans laquelle le canal de commande en liaison descendante est transmis dans la durée donnée, sur la base d'informations fournies par les informations de commande en liaison descendante.

2. Terminal utilisateur (20) selon la revendication 1, dans lequel l'unité de commande (401) est configurée pour déterminer la synchronisation de début de la transmission de données en liaison montante sur la base d'informations fournies par les informations de commande en liaison descendante incluses dans la durée donnée.

3. Terminal utilisateur (20) selon l'une ou l'autre des revendications 1 à 2, dans lequel les informations de commande en liaison descendante sont transmises à plusieurs reprises sur différentes sous-trames.

4. Terminal utilisateur (20) comprenant :
une unité de réception (203) configurée pour recevoir des informations de commande en liaison descendante sur un canal de commande en liaison descendante inclus dans une durée donnée dans une bande passante donnée ; et
une unité de commande (401) configurée pour commander une réception de données en liaison descendante sur la base des informations de commande en liaison descendante,
dans lequel l'unité de commande (401) est configurée pour commander une synchronisation de début de la réception de données en liaison descendante avec une référence à une dernière sous-trame dans laquelle le canal de commande en liaison descendante est transmis dans la durée donnée ; et
dans lequel l'unité de commande (401) est configurée pour déterminer la dernière sous-trame dans laquelle le canal de commande en liaison descendante est transmis dans la durée donnée, sur la base d'informations fournies par les informations de commande en liaison descendante.

5. Station de base radio (10) comprenant :
une unité de transmission (103) configurée pour transmettre des informations de commande en liaison descendante en utilisant un canal de commande en liaison descendante inclus dans une durée donnée dans une bande passante donnée ; et
une unité de réception (103) configurée pour recevoir des données en liaison montante transmises à partir d'au moins un terminal utilisateur (20) sur la base des informations de commande en liaison descendante,
dans laquelle l'unité de transmission (103) fournit des informations concernant une dernière sous-trame dans laquelle le canal de commande en liaison descendante est transmis dans la durée donnée, en utilisant les informations de commande en liaison descendante ; et
dans laquelle l'unité de réception (103) est configurée pour commander une synchronisation de début d'une réception de données en liaison montante avec une référence à une dernière sous-trame dans laquelle le canal de commande en liaison descendante est transmis dans la durée donnée.

6. Procédé de communication radio pour un terminal utilisateur (20), comprenant :
une réception d'informations de commande en liaison descendante sur un canal de commande en liaison descendante inclus dans une durée donnée dans une bande passante donnée ; et
une commande d'une transmission de données en liaison montante sur la base des informations de commande en liaison descendante,
dans lequel le terminal utilisateur (20) détermine la dernière sous-trame dans laquelle le canal de commande en liaison descendante est transmis dans la durée donnée, sur la base d'informations fournies par les informations de commande en liaison descendante ; et
dans lequel le terminal utilisateur (20) commande une synchronisation de début de la transmission de données en liaison montante avec une référence à une dernière sous-trame dans laquelle le canal de commande en liaison descendante est transmis dans la durée donnée.
